# EUROPÄISCHE PATENTSCHRIFT

(11) **EP 3 679 691 B1**
(45) Veröffentlichungstag und Bekanntmachung des Hinweises auf die Patenterteilung: **20.01.2021**
(21) Anmeldenummer: 18789040.5
(22) Anmeldetag: 12.10.2018
(51) Int. Cl.: H04L 12/44, H04L 12/40

(54) **DATENÜBERTRAGUNGSVERFAHREN UND KOMMUNIKATIONSNETZWERK**
DATA TRANSMISSION METHOD AND COMMUNICATION NETWORK
PROCÉDÉ DE TRANSMISSION DE DONNÉES ET RÉSEAU DE COMMUNICATION

(30) Priorität: 26.10.2017 DE 102017125086
(43) Veröffentlichungstag der Anmeldung: 15.07.2020
(73) Patentinhaber: Beckhoff Automation GmbH, 33415 Verl (DE)
(72) Erfinder: BUNTE, Thorsten, 33335 Gütersloh (DE); BUETTNER, Holger, 12157 Berlin (DE); JANSSEN, Dirk, 33415 Verl (DE); RETTIG, Thomas, 33378 Rheda-Wiedenbrück (DE); BECKHOFF, Hans, 33415 Verl (DE); VONNAHME, Erik, 33154 Salzkotten (DE)
(74) Vertreter: Patentanwaltskanzlei WILHELM & BECK
(86) Internationale Anmeldenummer: PCT/EP2018/077861
(87) Internationale Veröffentlichungsnummer: WO 2019/081230

(56) Entgegenhaltungen:
- EP-A1- 2 501 079
- WO-A1-2009/121087
- DE-A1-102014 112 082

## Beschreibung

Die Erfindung betrifft ein Verfahren zur Datenübertragung in einem Kommunikationsnetzwerk mit wenigstens einem Verteilerknoten und ein solches Kommunikationsnetzwerk.

Lokale Kommunikationsnetzwerke, sogenannte "local area networks" (LANs) umfassen in der Regel einen oder mehrere Server und Arbeitsstationen, sogenannten Knoten, die über ein Kommunikationsleitungsnetz, z. B. ein Koaxial-, Glasfaser- oder Twisted-Pair-Kabel miteinander verbunden sind. Solche LANs werden mit einem Netzwerk-Betriebssystem und einem Netzwerk-Protokoll betrieben.

Der am weitesten verbreitete Standard für ein LAN-Netzwerk-Protokoll ist das Ethernet, mit dem sich Telegramme, im Weiteren auch als Ethernet-Telegramme bezeichnet, mit Daten bis zu einer Länge von 1500 Bytes mit einer Geschwindigkeit im Gigabit-Bereich übertragen lassen. Das Ethernet-Protokoll wird vorzugsweise auch in der Automatisierungstechnik, insbesondere in der Fertigungs- und Prozessautomatisierung zum Datenaustausch im Rahmen von Steuerungsaufgaben verwendet.

In der Automatisierungstechnik werden als Kommunikationsnetzwerke sogenannte Feldbussysteme eingesetzt, bei denen dezentral angeordnete Geräte einer Maschinenperipherie wie Eingangs- und/oder Ausgangs-Module, Antriebe und Bedienerterminals über einen Feldbus mit Steuereinheiten verbunden sind.

Der Datenaustausch auf dem Feldbus erfolgt dabei meistens auf der Grundlage des Master-Slave-Prinzips.

Die Steuereinheiten am Feldbus sind in der Regel die aktiven Busteilnehmer, im Weiteren auch als Master-Teilnehmer bezeichnet. Sie sind im Besitz der Buszugriffsberechtigung und bestimmen den Datentransfer auf dem Feldbus. Die passiven Teilnehmer, im Weiteren auch als Slave-Teilnehmer bezeichnet, sind in der Regel die Maschinenperipheriegeräte. Sie haben keine Buszugriffsberechtigung und können empfangene Daten nur quittieren beziehungsweise auf Anfrage eines Master-Teilnehmers Daten übermitteln.

Beim Einsatz von Kommunikationsnetzwerken in der Automatisierungstechnik muss insbesondere die Echtzeitfähigkeit des Netzwerk-Protokolls garantiert sein. Bei der Steuerung von Maschinen ist es erforderlich, dass eine zyklische Bearbeitung der Steuerungsaufgabe ohne zeitliche Schwankungen, d. h. mit nur geringen Abweichungen von der gewünschten Zykluszeit im Bereich weniger Mikrosekunden erfolgt, wobei mit einer vorhersehbaren Antwortzeit auf die Regelanforderung reagiert wird.

Um in Automatisierungskommunikationsnetzwerken mit vielen Teilnehmern die Durchlaufzeit der Telegramme zu begrenzen und damit eine Echtzeitfähigkeit erreichen zu können, sind solche Automatisierungskommunikationsnetzwerke oft hierarchisch unter Verwendung von Verteilerknoten, sogenannten Switches, aufgebaut.

Der Verteilerknoten weist mehrere Schnittstellen auf, über die mehrere Teilnehmerstränge, im Weiteren auch als Netzwerksegmente bezeichnet, parallel in das Netzwerk eingebunden sind. Pro Netzwerksegment verfügt der Verteilerknoten in der Regel über zumindest eine Eingabeschnittstelle und eine Ausgabeschnittstelle. Diese Schnittstellen können einzeln oder als kombinierte Ein-/Ausgabeschnittstelle ausgebildet sein. Der Verteilerknoten kann auch über eine Mehrzahl an Eingabeschnittstellen und/oder Ausgabeschnittstellen bzw. kombinierten Ein- und Ausgabeschnittstellen pro Netzwerksegment verfügen. Sofern im Weiteren von einer Ein-/Ausgabe-Schnittstelle die Rede ist, so sind stets alle vorstehenden Konstellationen darunter zu verstehen, wobei jeweils bei der Auslegung des Kommunikationsnetzwerkes die für den jeweiligen Anwendungszweck optimale Ausgestaltung der Ein-/Ausgabe-Schnittstelle ausgewählt werden kann.

Der Verteilerknoten untersucht dabei jedes auf einer Ein-/Ausgabe-Schnittstelle empfangene Telegramm auf die Adresse des angesprochenen Teilnehmers und leitet dann das Telegramm über die zugeordnete Ein-/Ausgabe-Schnittstelle, an die der angesprochene Teilnehmer angeschlossen ist, weiter.

Der Verteilerknoten arbeitet in der Regel nach dem First In First Out (FIFO) Prinzip, bei welchem diejenigen Telegramme, die zuerst empfangen wurden, auch zuerst wieder weitergeleitet werden. Dies verhindert aber eine zuverlässige Echtzeitbearbeitung der Telegramme. Bei neueren Verteilerknoten besteht die Möglichkeit, einzelne Telegramme beim Weiterleiten zu priorisieren, um die im Rahmen der Automatisierungstechnik geforderte Echtzeitfähigkeit zu gewährleisten.

Weiterhin sind Verteilerknoten bekannt, die aufgrund von protokollspezifischen Kennungen Telegramme zu fest vorgegebenen Zeitpunkten weiterleiten, um eine Echtzeitbearbeitung zu ermöglichen. Im Verteilerknoten ist dann eine Vermittlungstabelle, eine sogenannte Routingliste, hinterlegt, die für jedes echtzeitrelevante Telegramm eine Telegrammkennung, Ein-/Ausgabe-Schnittstellen und einen Weiterleitungszeitpunkt enthält.

In der Regel werden im Netzwerk neben den echtzeitrelevanten Telegrammen, die zyklisch Ein-/Ausgabedaten der Teilnehmer enthalten, auch weitere nicht-echtzeitrelevante Telegramme, die üblicherweise azyklisch Parameterdaten oder Statusdaten der Teilnehmer enthalten, empfangen, übertragen und weitergeleitet. Für solche nicht-echtzeitrelevante Telegramme ist in der Routingliste des Verteilerknotens dann kein Weiterleitungszeitpunkt vorgegeben.

Neben der Verwendung von Verteilerknoten als Switche, um mehrere weitere Verteilerknoten oder Netzwerksegmente parallel in das Netzwerk einzubinden, kann ein Verteilerknoten auch als Synchronisierungs-Gateway für den Master-Teilnehmer eingesetzt werden. Der Verteilerknoten weist dann nur zwei Ein-/Ausgabe-Schnittstellen zur Verbindung des Master-Teilnehmers mit dem Netzwerk auf. Der zwischengeschaltete Verteilerknoten dient dann dazu, alle Telegramme des Master-Teilnehmers mit dem Netzwerk zu synchronisieren. Da die Durch- bzw. Weiterleitung der Telegramme von einer Ein-/Ausgabe-Schnittstelle zur anderen Ein-/Ausgabe-Schnittstelle im Verteilerknoten fest vorgeben ist, muss die Routingliste nur für jedes echtzeitrelevante Telegramm einen Weiterleitungszeitpunkt enthalten.

Damit der Weiterleitungsvorgang von nicht-echtzeitrelevanten Telegrammen den Weiterleitungsvorgang von echtzeitrelevanten Telegrammen nicht verzögert, ist ein Datenübermittlungszyklus für die Telegramme im Verteilerknoten in der Regel in drei Zeitabschnitte unterteilt. Eine solche Vorgehensweise ist in der US 8,179,923 B2 beschrieben.

In einem ersten Zeitabschnitt, dem sogenannten zyklischen Zeitabschnitt, dürfen nur echtzeitrelevante Telegramme empfangen und weitergeleitet werden. In dem sich daran anschließenden zweiten Zeitabschnitt, dem sogenannten azyklischen Zeitabschnitt, werden dann nicht-echtzeitrelevante Telegramme übermittelt. In dem letzten dritten Zeitabschnitt, dem sogenannten Übergangszeitabschnitt, dürfen dann zwar weiterhin alle Telegramme empfangen, aber nicht mehr weitergeleitet werden.

Der Übergangszeitabschnitt, der wenigstens der maximalen Weiterleitungszeitdauer für ein nicht-echtzeitrelevantes Telegramm entspricht, verhindert, dass es in dem daran anschließenden nächsten zyklischen Zeitabschnitt zu einem verzögerten Übermitteln von echtzeitrelevanten Telegrammen durch einen noch in Gang befindlichen Weiterleitungsvorgang eines nicht-echtzeitrelevanten Telegramms kommt. Die im Übergangszeitabschnitt empfangenen nicht-echtzeitrelevanten Telegramme werden im Verteilerknoten zwischengespeichert und im nächsten azyklischen Zeitabschnitt weitergeleitet.

Da jeder weitere Verteilerknoten unkontrolliert nicht-echtzeitrelevante Telegramme außerhalb des zyklischen Zeitabschnitts, insbesondere auch in dem Übergangszeitabschnitt weiterleiten kann, kommt es im Verteilerknoten leicht zu Überlastsituationen der nicht-echtzeitrelevanten Telegramme. Solche Überlastsituationen treten insbesondere dann auf, wenn der azyklische Zeitabschnitt im Datenübermittlungszyklus gegenüber dem zyklischen Zeitabschnitt stark verkürzt ist.

Aufgrund der Laufzeiten innerhalb des Netzwerks und um möglichst kurze Totzeiten bei der Datenübertragung zu erreichen, werden die echtzeitrelevanten Telegramme vom Verteilerknoten oft nicht unmittelbar hintereinander im zyklischen Zeitabschnitt weitergeleitet, sondern mit dazwischen liegenden Zeitlücken, wodurch sich der zyklische Zeitabschnitt verlängert. In einem solchen Fall besteht dann die Gefahr, dass wenn in dem Übergangszeitabschnitt und im azyklischen Zeitabschnitt zu viele nicht-echtzeitrelevante Telegramme empfangen werden, der Empfangspuffer für die nicht-echtzeitrelevanten Telegramme im Verteilerknoten überläuft.

Weiterhin muss das Kommunikationsnetzwerk mit dem Verteilerknoten bei der in der US 8,179,923 B2 vorgeschlagenen Vorgehensweise in einer Konfigurationsphase immer voreingestellt werden. Wenn es Änderungen bei den echtzeitrelevanten Telegrammen gibt, die in dem zyklischen Zeitabschnitt weitergeleitet werden, muss dann eine neue Konfiguration generiert und im Verteilerknoten gespeichert werden. Insbesondere dann, wenn im Kommunikationsnetzwerk mehrere Verteilerknoten vorgesehen sind, kann eine solche Konfigurationsänderung mehrere Datenübertragungszyklen in Anspruch nehmen.

Um den Konfigurationsaufwand zu reduzieren, wird in der DE 100 18 136 A1 ein Datenübertragungsverfahren für ein Kommunikationsnetzwerk mit mehreren Netzwerksegmenten, die über Verteilerknoten miteinander verbunden sind, vorgeschlagen, bei dem zwischen einem Teilnehmer in einem Netzwerksegment und einem Teilnehmer in einem anderen Netzwerksegment ausgetauschte Telegramme jeweils Steuerdaten zugeordnet werden, die Informationen über die Weiterleitung des Telegramms durch die zwischen den Teilnehmern angeordneten Verteilerknoten enthalten.

Die Steuerdaten werden dabei von jedem Verteilerknoten beim Durchlauf des Telegramms modifiziert, um den Weiterleitungsfortschritt des Telegramms im Rahmen der Datenübertragung anzuzeigen. Es besteht aber weiter die Gefahr, dass Kollisionen zwischen verschiedenen Telegrammen im Verteilerknoten auftreten können, wodurch insbesondere eine Echtzeitfähigkeit der Datenübertragungsverfahren nicht gewährleistet werden kann.

Aus der EP 2 501 079 A1 ist ein Verfahren zur Datenübertragung und ein Kommunikationsnetzwerk mit den Merkmalen des Obergriffs des Anspruchs 1 bzw. des Anspruchs 7 bekannt. Ein ähnlicher Stand der Technik ist aus der WO 2009/121087 A1 bekannt. Die DE 10 2014 112082 A1 offenbart eine Master-Slave-Datenübertragung.

Aufgabe der Erfindung ist es, ein Datenübertragungsverfahren für ein Automatisierungskommunikationsnetzwerk mit wenigstens einem Verteilerknoten und ein solches Automatisierungskommunikationsnetzwerk bereitzustellen, die ein einfaches und zuverlässiges Übertragen von echtzeitrelevanten und nicht-echtzeitrelevanten Telegrammen im Automatisierungskommunikationsnetzwerk ermöglichen.

Diese Aufgabe wird durch ein Datenübertragungsverfahren gemäß Anspruch 1 und ein Automatisierungskommunikationsnetzwerk nach Anspruch 7 gelöst. Bevorzugte Weiterbildungen sind in den abhängigen Ansprüchen angegeben.

Für ein Datenübertragungsverfahren mit einem Automatisierungskommunikationsnetzwerk, im Weiteren auch einfach als Kommunikationsnetzwerk bezeichnet, mit einem Master-Teilnehmer und zumindest einem Slave-Teilnehmer ist wenigstens ein Verteilerknoten vorgesehen, der mehrere Ein-/Ausgabe-Schnittstellen aufweist, die jeweils mit einem Netzwerksegment in Verbindung steht, wobei in einem ersten Netzwerksegment der Master-Teilnehmer und in einem zweiten Netzwerksegment der Slave-Teilnehmer angeordnet ist. Ein Datenaustausch zwischen dem Master-Teilnehmer und dem Slave-Teilnehmer erfolgt in Form von Telegrammen, der vom Master-Teilnehmer angestoßen wird. Den von dem Slave-Teilnehmer an den Master-Teilnehmer zu übermittelnden Telegrammen sind jeweils Steuerdaten zugeordnet, die eine Weiterleitungszeitinformation enthalten, wann das entsprechende Telegramm vom Verteilerknoten über die Ein-/Ausgabe-Schnittstelle in Richtung zum ersten Netzwerksegment mit dem Master-Teilnehmer ausgeben werden soll, wobei die Weiterleitungszeitinformation vom Master-Teilnehmer festgelegt wird.

Das In-Verbindung-stehen einer Ein-/Ausgabe-Schnittstelle des Verteilerknotens mit einem Netzwerksegment kann durch ein direktes Anschließen des Netzwerksegments an die Ein-/AusgabeSchnittstelle erfolgen. Es können aber auch zwischen der Ein-/Ausgabe-Schnittstelle des Verteilerknotens und dem Netzwerksegment weitere Verteilerknoten bzw. andere Vermittlungseinheiten zwischen geschaltet sein. Wenn von einer Ein-/AusgabeSchnittstelle die Rede ist, bedeutet dies, dass zumindest eine Eingabeschnittstelle und eine Ausgabeschnittstelle vorgesehen sind. Diese Schnittstellen können einzeln oder als kombinierte Ein-/Ausgabeschnittstelle ausgebildet sein.

Mit dieser Vorgehensweise lässt sich der Telegrammdurchsatz im Verteilerknoten bei Telegrammen, die von den Slave-Teilnehmern an den Master-Teilnehmer übermittelt werden, zuverlässig steuern, um Telegrammkollisionen zu vermeiden. Den von den Slave-Teilnehmern an den Master-Teilnehmer zu übermittelnden Telegrammen sind jeweils Steuerdaten zugeordnet, die eine Weiterleitungszeitinformation enthalten, wann das entsprechende Telegramm vom Verteilerknoten über die Ein-/Ausgabe-Schnittstelle an das Netzwerksegment mit dem Master-Teilnehmer ausgegeben werden soll.

Die Weiterleitungszeitinformation wird dabei vom Master-Teilnehmer vorab festgelegt. So besteht die Möglichkeit, flexibel durch den Master-Teilnehmer eine exakte zeitliche Planung der Telegramme, die von den Slave-Teilnehmern zum Master-Teilnehmer über den Verteilerknoten weitergeleitet werden, vorzunehmen.

Die Weiterleitungszeitinformation muss dabei nicht vorab im Verteilerknoten eingespeichert werden, sondern kann vom Master-Teilnehmer entsprechend dem in jedem Steuerzyklus tatsächlich anfallenden Telegrammverkehr vorgenommen und im Rahmen der Steuerdaten in den Telegrammen dem Verteilerknoten übermittelt werden. Durch die Möglichkeit, allen Telegrammen, nicht nur den zyklischen, sondern auch den azyklischen Telegrammen, eine Weiterleitungszeitinformation zuzuordnen, lassen sich auch Überlastsituationen im Verteilerknoten vermeiden.

Gemäß einer Ausführungsform werden die Telegramme auf einem geschlossenen Datenübertragungsweg ausgehend vom Master-Teilnehmer zum Slave-Teilnehmer auf einem Hinweg und zurück auf einem Rückweg übertragen, wobei der Master-Teilnehmer für jedes von dem Slave-Teilnehmer an den Master-Teilnehmer zu übermittelnde Telegramm einen Daten-Kopfsatz erzeugt, der einen Steuerabschnitt und daran anschließend pro zu durchlaufendem Verteilerknoten einen Datenabschnitt aufweist. Der Steuerabschnitt enthält eine Telegrammkennung. Weiterhin umfasst der dem Verteilerknoten zugeordnete Datenabschnitt eine Weiterleitungsinformation für das Telegramm, die die Zuordnung der Ein-/Ausgabe-Schnittstelle, an die das erste Netzwerksegment mit dem Master-Teilnehmer angeschlossen ist, und der Ein-/Ausgabe-Schnittstelle, an die das zweite Netzwerksegment mit dem Slave-Teilnehmer angeschlossen ist, ermöglicht, und die die Weiterleitungszeitinformation enthält, wann das Telegramm vom Verteilerknoten über die Ein-/Ausgabe-Schnittstelle auf das erste Netzwerksegment mit dem Master-Teilnehmer ausgegeben werden soll.

Weiterhin kann der Steuerabschnitt des Telegramms einen Zähler aufweisen, der ausgehend vom Master-Teilnehmer die Anzahl der vom Telegramm zu durchlaufenden Verteilerknoten bis zum Slave-Teilnehmer anzeigt, wobei der Verteilerknoten beim Telegrammdurchlauf auf dem Hinweg vom Master-Teilnehmer zum Slave-Teilnehmer den Zähler dekrementiert und auf dem Rückweg vom Slave-Teilnehmer zum Master-Teilnehmer den Zähler inkrementiert.

Gemäß einer Ausführungsform nimmt der Verteilerknoten auf dem Hinweg des Telegramms vom Master-Teilnehmer zum Slave-Teilnehmer beim Telegrammdurchlauf den dem Verteilerknoten zugeordneten Datenabschnitt aus dem Daten-Kopfsatz des Telegramms und dann, wenn der Zähler anzeigt, dass kein weiterer Verteilerknoten zu durchlaufen ist, zusätzlich den Steuerabschnitt aus dem Daten-Kopfsatz des Telegramms heraus, wobei der Verteilerknoten auf dem Rückweg des Telegramms vom Slave-Teilnehmer zum Master-Teilnehmer beim Telegrammdurchlauf den dem Verteilerknoten zugeordneten Datenabschnitt in den Daten-Kopfsatz des Telegramms, und dann wenn das Telegramm keinen Steuerabschnitt aufweist, zusätzlich den Steuerabschnitt in den Daten-Kopfsatz des Telegramms einfügt.

Der Datenabschnitt im Daten-Kopfsatz des Telegramms kann dabei eine Kommandoinformation enthalten, die die Bedeutung der weiteren Daten im Datenabschnitt festlegt, wobei die Kommandoinformation auf dem Hinweg des Telegramms vom Master-Teilnehmer zum Slave-Teilnehmer dem Verteilerknoten anzeigt, dass die weiteren Daten die Weiterleitungsinformation und die Weiterleitungszeitinformation umfassen.

Weiterhin kann die Kommandoinformation auf dem Rückweg des Telegramms vom Slave-Teilnehmer zum Master-Teilnehmer anzeigen, dass die weiteren Daten eine Diagnoseinformation umfassen.

Das Kommunikationsnetzwerk ist in einer Ausführungsform ein Feldbussystem, vorzugsweise ein Ethernet-basiertes Feldbussystem, insbesondere ein EtherCAT-Feldbussystem.

Die Erfindung wird nachfolgend unter Bezugnahme auf die beigefügten Figuren näher erläutert. Gleiche Bezugszeichen bezeichnen dabei gleiche oder äquivalente Komponenten.

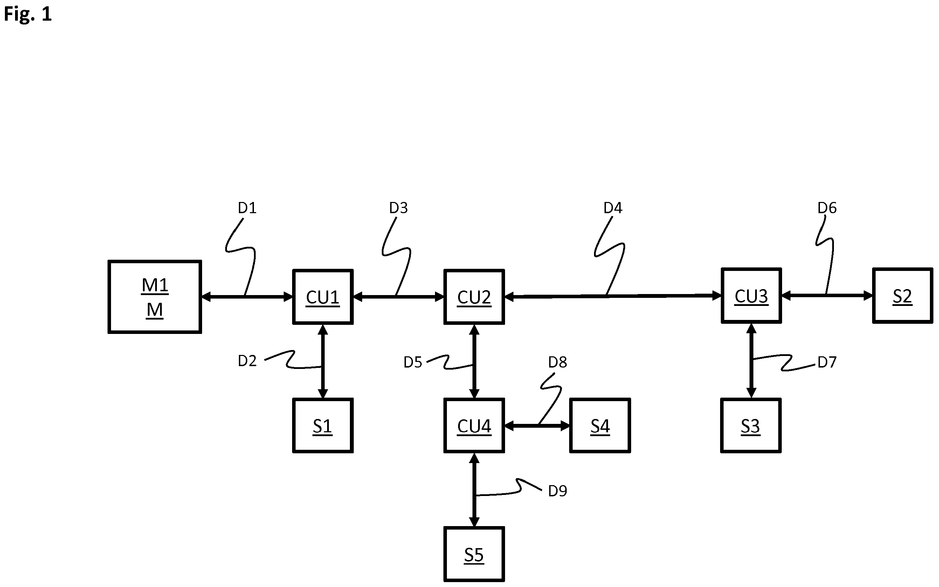

- Fig. 1: zeigt schematisch den Aufbau eines Master-Slave-Kommunikationsnetzwerkes mit mehreren Netzwerksegmenten und verketteten Verteilerknoten,

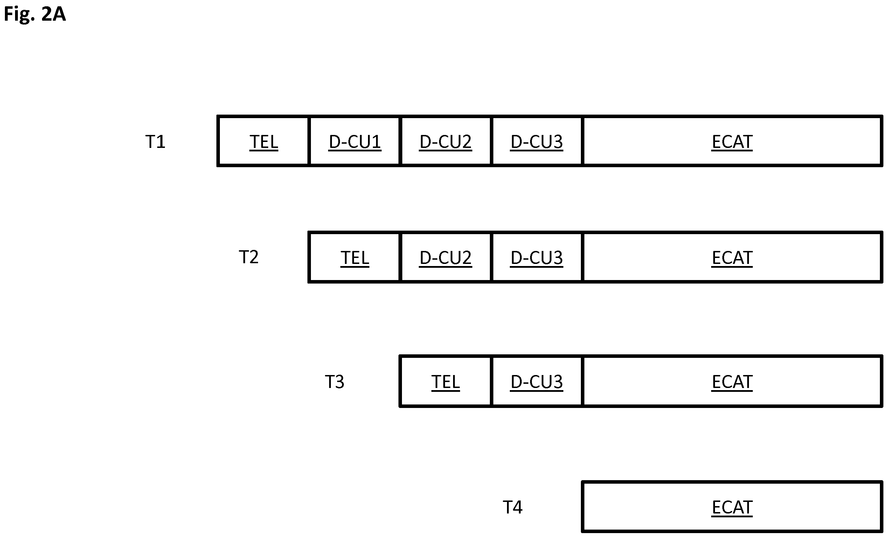

- Fig. 2A: zeigt schematisch den Aufbau eines Telegramms zum Datenaustausch zwischen einem Master-Teilnehmer und Slave-Teilnehmern in dem in Fig. 1 gezeigten Kommunikationsnetzwerk, wobei zwischen dem Netzwerksegment mit dem Master-Teilnehmer und dem Netzwerksegment mit den Slave-Teilnehmern drei Verteilerknoten vorgesehen sind, und wobei der Aufbau des Telegramms nach dem Master-Teilnehmer und nach dem Durchlaufen der drei Verteilerknoten auf dem Hinweg gezeigt ist,

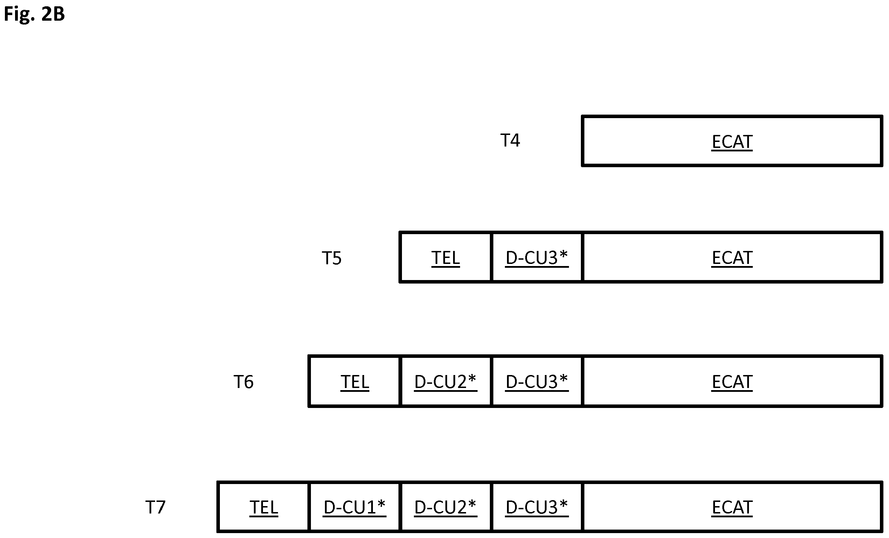

- Fig. 2B: zeigt schematisch den Aufbau eines Telegramms zum Datenaustausch zwischen einem Master-Teilnehmer und Slave-Teilnehmern in dem in Fig. 1 gezeigten Automatisierungskommunikationsnetzwerk, wobei zwischen dem Netzwerksegment mit dem Master-Teilnehmer und dem Netzwerksegment mit den Slave-Teilnehmern drei Verteilerknoten vorgesehen sind, und wobei der Aufbau des Telegramms nach den Slave-Teilnehmern und nach dem Durchlaufen der drei Verteilerknoten auf dem Rückweg gezeigt ist.

Die Erfindung wird am Beispiel eines Kommunikationsnetzwerkes beschrieben, das im Rahmen der Fertigungs- und Prozessautomatisierung eingesetzt wird. Die Verwendungsangabe ist jedoch nicht einschränkend zu verstehen. Die Erfindung lässt sich bei allen Kommunikationsnetzwerken anwenden, bei denen wenigstens ein Verteilerknoten vorgesehen ist, der mehrere Ein-/Ausgabe-Schnittstellen aufweist, an die jeweils ein Netzwerksegment angeschlossen ist.

Kommunikationsnetzwerke in der Automatisierungstechnik sind üblicherweise als serielle Feldbussysteme ausgestaltet, bei denen dezentral angeordnete Geräte mit Steuerungseinheiten kommunizieren. Die Teilnehmer sind dabei über einen Feldbus miteinander vernetzt.

Der Datenaustausch zwischen den Teilnehmern erfolgt in der Regel auf der Grundlage des Master-Slave-Prinzips. Die aktiven Busteilnehmer, auch als Master-Teilnehmer bezeichnet, sind die Steuereinheiten, die den Datentransfer auf dem seriellen Feldbus bestimmen. Die Geräte der Maschinenperipherie, auch als Slave-Teilnehmer bezeichnet, bilden dagegen die passiven Busteilnehmer ohne eigene Buszugriffberechtigung, d. h. sie dürfen nur empfangene Nachrichten quittieren oder auf Anfrage eines Master-Teilnehmers Nachrichten übermitteln. Die Geräte der Maschinenperipherie sind beispielsweise Ein-und/oder Ausgabekomponenten, die die Sensoren oder Aktoren einer Maschine mit dem Feldbus verbinden. Dabei können die Ein- und/oder Ausgabekomponenten auch direkt in die Sensoren oder Aktoren der Maschine integriert sein.

In der Automatisierungstechnik erfolgt die Steuerung mithilfe eines Datenaustauschs über den Feldbus in der Regel so, dass der Master-Teilnehmer zyklisch Steuerprozesse durchführt, um auf der Grundlage von Eingangsdaten der Slave-Teilnehmer Ausgangsdaten für die Slave-Teilnehmer zu erzeugen. Der Master-Teilnehmer gibt die Ausgangsdaten in Form von Telegrammen auf den Feldbus aus, wobei die Slave-Teilnehmer die zugeordneten Ausgangsdaten aus dem Telegramm entnehmen, um mit den Ausgangsdaten lokale Teilnehmerprozesse auszuführen. Die von den lokalen Teilnehmerprozessen ermittelten Daten werden dann von den Slave-Teilnehmer an den Master-Teilnehmer zurückübermittelt und anschließend als Eingangsdaten für den nächsten Steuerprozess vom Master-Teilnehmer genutzt.

Bei Feldbussystemen werden in der Regel neben Telegrammen die zur Durchführung von Steuerungsaufgaben dienen und deren Datenverkehr zyklisch erfolgt, auch weitere Telegramme in einem azyklischen Datenverkehr ausgetauscht. Der azyklische Datenverkehr wird für Ereignisse im Feldbussystem genutzt, die sich nicht ständig wiederholen. Azyklische Telegramme sind zum Beispiel Telegramme mit Parametrisierungs- und Konfigurationsdaten sowie Daten mit Diagnosemeldungen. Der azyklische Datenverkehr ist im Gegensatz zum zyklischen Datenverkehr nicht-echtzeitrelevant, weshalb im Weiteren zyklische Telegramme auch als echtzeitrelevante Telegramme und azyklische Telegramm als nicht-echtzeitrelevante Telegramme bezeichnet werden.

Um schnelle Regelungsvorgänge mithilfe des Feldbussystems durchführen zu können, muss eine kurze Umlaufzeit der Telegramme garantiert werden. In einem Feldbussystem mit vielen Slave-Teilnehmern werden deshalb in der Regel Verzweigungen eingesetzt, um die Laufzeit der Telegramme zu verkürzen. Das Feldbussystem weist in der Datenübertragungsstrecke einen oder mehrere Verteilerknoten auf, an dem mehrere unabhängige Netzwerksegmente angeschlossen sind.

Feldbussysteme mit Master-Slave-Architektur können mit unterschiedlichen Übertragungsprotokollen betrieben werden, wobei bevorzugt Protokolle auf der Grundlage der Ethernet-Technologie eingesetzt werden. Bei der Ethernet-Technologie werden die Daten paketorientiert übertragen. Das Ethernet-Telegramm ist standardmäßig 1518 Byte lang, wobei 18 Byte für einen Kopfabschnitt und einen Endabschnitt reserviert sind. Im Kopfabschnitt des Ethernet-Telegramms ist ein Datenfeld vorgesehen, in dem festgelegt ist, mit welchem Ethernet-Protokolltyp die Nutzdaten im Ethernet-Telegramm interpretiert werden sollen.

In der Automatisierungstechnik werden im Rahmen der Ethernet-Technologie vorzugsweise Protokoll-Typen eingesetzt, die eine Echtzeitfähigkeit garantieren. Ein solcher Echtzeit-Standard ist das EtherCAT-Protokoll, bei dem die Verarbeitung der Nutzdaten im Ethernet-Telegramm durch die Slave-Teilnehmer im Durchlauf erfolgt, um ein schnelles industrielles Ethernet-System bereitzustellen.

In das EtherCAT-Telegramm sind dabei Datagramme eingebettet, die jeweils ein Steuerdatenfeld und ein Nutzdatenfeld umfassen. Im Steuerdatenfeld ist ein Befehlsfeld enthalten, das den von dem zugeordneten Slave-Teilnehmer mit dem Nutzdatenfeld auszuführenden Datenübertragungsvorgang anzeigt, das heißt, ob ein Lesevorgang ausgeführt werden soll, bei dem der Slave-Teilnehmer Daten aus dem Nutzdatenfeld entnehmen soll, oder ob ein Schreibvorgang, bei dem der Slave-Teilnehmer Daten in das Nutzdatenfeld einfügen soll oder auch ob ein Schreib-/ Lesevorgang, bei dem der Slave-Teilnehmer zuerst Daten aus dem Nutzdatenfeld entnehmen und anschließend dann Daten in das Nutzdatenfeld einfügen soll. Im Adressfeld des Steuerdatenfeldes ist dann der Slave-Teilnehmer beziehungsweise der Datenbereich im Slave-Teilnehmer festgelegt, mit dem der Slave-Teilnehmer beim Durchlauf des Nutzdatenfeldes Daten austauschen soll.

Der Slave-Teilnehmer beginnt mit der Datenverarbeitung dabei sofort nach dem Empfang des Steuerdatenfeldes im Datagramm des EtherCAT-Telegramms und wertet das Befehlsfeld und das Adressfeld aus. Wenn der Slave-Teilnehmer adressiert ist, entnimmt der Slave-Teilnehmer bei einem Lesedatagramm beziehungsweise bei einem Schreib-/ Lesedatagramm dann die für den Slave-Teilnehmer bestimmten Ausgangsdaten aus dem Nutzdatenfeld während das Datagramm im EtherCAT-Telegramm durch den Slave-Teilnehmer hindurchläuft. Bei einem Schreibdatagramm beziehungsweise bei einem Schreib-/ Lesedatagramm werden vom Slave-Teilnehmer Eingangsdaten im Durchlauf in das Nutzdatenfeld im Datagramm eingefügt. Das EtherCAT-Telegramm wird bei der Verarbeitung der Datagramme im Durchlauf vom Slave-Teilnehmer nur kurz verzögert.

Die Erfindung wird im Folgenden am Beispiel des EtherCAT-Telegrammverkehrs erläutert. Es besteht jedoch die Möglichkeit im Rahmen der Erfindung ein anderes, vorzugsweise echtzeitfähiges Ethernet-Protokoll einzusetzen. Die Erfindung kann aber auch in einem nicht Ethernet-basierten Kommunikationsnetzwerk verwendet werden, bei dem wenigstens ein Verteilerknoten vorgesehen ist, der mehrere Ein-/Ausgabe-Schnittstellen aufweist, an die jeweils ein Netzwerksegment angeschlossen ist, wobei in einem ersten Netzwerksegment ein Master-Teilnehmer und in einem zweiten Netzwerksegment zumindest ein Slave-Teilnehmer angeordnet ist.

In einem Kommunikationsnetzwerk mit einem Verteilerknoten, an dem mehrere Netzwerksegmente angeschlossen sind, müssen Telegramme, mit denen Ein- und Ausgangsdaten zwischen dem Master-Teilnehmer und den Slave-Teilnehmer ausgetauscht werden, innerhalb eines Steuerzyklus rechtzeitig den Empfänger erreichen, um sicherzustellen, dass eine Echtzeit-Kommunikation gewährleistet ist, wie sie im Rahmen der Automatisierungstechnik gefordert wird. Dabei ist insbesondere zu verhindern, dass es im Verteilerknoten zu Kollisionen zwischen gleichzeitig eintreffenden zyklischen Telegrammen kommt. Ferner können Überlastsituationen im Verteilerknoten insbesondere durch azyklische Telegramme hervorgerufen werden.

Bei Kommunikationsnetzwerken mit einer Master-Slave-Architektur besteht die Gefahr von Kollisionen und Überlastsituationen im Verteilerknoten insbesondere bei Telegrammen, die von den Slave-Teilnehmern an den Master-Teilnehmer übermittelt werden. Der Master-Teilnehmer kann nämlich den Sendevorgang aufgrund seiner Buszugriffsberechtigung zeitlich so steuern, dass Telegrammkollisionen beziehungsweise eine Telegrammüberlast im Verteilerknoten vermieden werden. Die Slave-Teilnehmer dagegen, die selbst keine Buszugriffsberechtigung haben, können keine zeitliche Planung des Übermittlungsvorgangs durchführen, sodass es am Verteilerknoten, an den mehrere Netzwerksegmente mit Slave-Teilnehmern angeschlossen sind, zu gleichzeitig eintreffenden Telegrammen beziehungsweise einem Telegrammüberlauf kommen kann.

Um den Telegrammdurchsatz im Verteilerknoten insbesondere bei Telegrammen, die von den Slave-Teilnehmern an den Master-Teilnehmer übermittelt werden, steuern zu können, sind den von dem Slave-Teilnehmern an den Master-Teilnehmer zu übermittelnden Telegrammen jeweils Steuerdaten zugeordnet, die eine Weiterleitungszeitinformation enthalten, wann das entsprechende Telegramm vom Verteilerknoten über die Ein-/Ausgabe-Schnittstelle an das Netzwerksegment mit dem Master-Teilnehmer ausgegeben werden soll.

Die Weiterleitungszeitinformation wird dabei vom Master-Teilnehmer vorab festgelegt. Mit dieser Vorgehensweise besteht die Möglichkeit, flexibel durch den Master-Teilnehmer eine exakte zeitliche Planung der Telegramme, die von den Slave-Teilnehmer zum Master-Teilnehmer über den Verteilerknoten weitergeleitet werden, vorzunehmen.

Die Weiterleitungszeitinformation muss dabei nicht vorab im Verteilerknoten eingespeichert werden, sondern kann vom Master-Teilnehmer entsprechend dem in jedem Steuerzyklus tatsächlich anfallenden Telegrammverkehr vorgenommen und im Rahmen der Steuerdaten in den Telegrammen dem Verteilerknoten übermittelt werden. Durch die Möglichkeit, allen Telegrammen, nicht nur den zyklischen, sondern auch den azyklischen Telegrammen, eine Weiterleitungszeitinformation zuzuordnen, lassen sich zudem auch Überlastsituationen im Verteilerknoten vermeiden.

In Fig. 1 ist eine Beispielskonfiguration für ein Master-Slave-Kommunikationsnetzwerk gezeigt. Das Kommunikationsnetzwerk weist vier Verteilerknoten CU1, CU2, CU3 und CU4 auf, die über einen Feldbus miteinander verbunden sind. Die Verteilerknoten weisen dabei einen Speicher auf. Die Feldbustopologie ist dabei so ausgeführt, dass ein erstes Netzwerksegment M1 mit dem Master-Teilnehmer M über eine erste Datenübertragungsstrecke D1 an eine erste Ein-/Ausgabe-Schnittstelle des ersten Verteilerknotens CU1 angeschlossen ist. Eine zweite Ein-/Ausgabe-Schnittstelle des ersten Verteilerknotens CU1 ist ferner über eine zweite Datenübertragungsstrecke D2 mit einem zweiten Netzwerksegment S1, das einen oder mehrere Slave-Teilnehmer aufweist, verbunden. Weiterhin ist der erste Verteilerknoten CU1 über eine dritte Ein-/Ausgabe-Schnittstelle und eine dritte Datenübertragungsstrecke D3 an eine erste Ein-/Ausgabe-Schnittstelle des zweiten Verteilerknotens CU2 angeschlossen.

Der zweite Verteilerknoten CU2 weist eine zweite und dritte Ein-/Ausgabe-Schnittstelle auf, die über eine vierte Datenübertragungsstrecke D4 mit der ersten Ein-/Ausgabe-Schnittstelle des dritten Verteilerknotens CU3 beziehungsweise über eine fünfte Datenübertragungsstrecke D5 mit der ersten Ein-/Ausgabe-Schnittstelle des vierten Verteilerknotens CU4 verbunden sind.

Der dritte Verteilerknoten CU3 hat eine zweite Ein-/Ausgabe-Schnittstelle, an der über eine sechste Datenübertragungsstrecke D6 ein drittes Netzwerksegment S2 mit einem oder mehreren Slave-Teilnehmern, und eine dritte Ein-/Ausgabe-Schnittstelle, an die über eine siebte Datenübertragungsstrecke D7 ein viertes Netzwerksegment S3 mit einem oder mehreren Slave-Teilnehmern, angeschlossen sind.

Der vierte Verteilerknoten CU4 umfasst eine zweite Ein-/Ausgabe-Schnittstelle, die über eine achte Datenübertragungsstrecke D8 mit einem fünften Netzwerksegment S4 mit einem oder mehreren Slave-Teilnehmern, und eine dritte Ein-/Ausgabe-Schnittstelle, die über eine neunte Datenübertragungsstrecke D9 mit einem sechsten Netzwerksegment S5 mit einem oder mehreren Slave-Teilnehmern verbunden sind.

In der in Fig. 1 gezeigten Beispielskonfiguration für ein Master-Slave-Kommunikationsnetzwerk weisen die Netzwerksegmente M1, S1, S2, S3, S4, S5 jeweils einen Datenübertragungsweg mit einem Hin- und einem Rückweg, im Weiteren auch als Hin- bzw. Rückkanal bezeichnet, auf. Die Netzwerksegmente M1, S1, S2, S3, S4 und S5 bilden so ausgehend von der Ein-/Ausgabe-Schnittstelle am Verteilerknoten einen geschlossenen Datenpfad. Die Datenübertragungsstrecken D1, D2, D3, D4, D5, D6, D7, D8 und D9 zwischen den Verteilerknoten CU1, CU2, CU3, CU4 weisen ebenfalls einen Hin- und einen Rückkanal auf. Die Möglichkeit der bidirektionalen Datenübertagung zwischen den einzelnen Komponenten ist in Fig. 1 durch die Doppelpfeile angezeigt.

Die Datenübertragung im Kommunikationsnetzwerk kann auf der Grundlage eines einheitlichen Protokolls, beispielsweise dem EtherCAT-Protokoll erfolgen. Es besteht jedoch auch die Möglichkeit, verschiedene Protokolle im Kommunikationsnetzwerk miteinander zu vermischen, das heißt, die einzelnen Netzwerksegmente M1, S1, S2, S3, S4, S5 mit unterschiedlichen Protokollen zu betreiben. Der Master-Teilnehmer M ist dann so ausgelegt, dass er alle im Kommunikationsnetzwerk verwendeten Protokolle verarbeiten kann.

In der Beispielskonfiguration sind die vier Verteilerknoten CU1, CU2, CU3, CU4 vorzusehen. Es besteht aber auch die Möglichkeit, mehr oder weniger Verteilerknoten einzusetzen, die in beliebiger Weise miteinander verbunden sein können. Ferner können an jedem Verteilerknoten eine beliebige Anzahl von Netzwerksegmenten mit Slave-Teilnehmern angeschlossen werden, wobei die einzelnen Netzwerksegmente eine beliebige Anzahl von Slave-Teilnehmern aufweisen können.

Im Folgenden wird beispielhaft ein Datenaustausch zwischen Slave-Teilnehmern im dritten Netzwerksegment S2 und dem Master-Teilnehmer M auf der Grundlage des EtherCAT-Protokolls erläutert. Der Master-Teilnehmer M stellt jedem EtherCAT-Telegramm, bei dem wenigstens ein Slave-Teilnehmer im dritten Netzwerksegment S2 einen Schreibvorgang ausführen soll, das heißt Daten in ein Nutzdatenfeld des EtherCAT-Telegramms einschreiben soll, einen Daten-Kopfsatz, im Folgenden auch als Routing-Header bezeichnet, voran.

Der Routing-Header enthält Informationen für die zwischen dem Master-Teilnehmer M und den Slave-Teilnehmern im dritten Netzwerksegment S2 angeordneten Verteilerknoten CU1, CU2, CU3 über die Telegramm-Weiterleitung, also das Telegramm-Routing, sowie Zeitinformationen, wann das Telegramm weitergeleitet werden soll. Der Master-Teilnehmer M kann mit Hilfe des Routing-Headers den Telegrammverkehrs in jedem Steuerzyklus zeitlich optimieren.

Da der Master-Teilnehmer M das Routing in den Verteilerknoten für alle von den Slave-Teilnehmern übermittelten Telegramme vorgibt, das heißt, nicht nur für die zyklischen Telegramme sondern auch für die azyklischen Telegramme, werden Telegramm-Kollisionen und Überlastsituationen in den Verteilerknoten, die vor allem durch Ereignis getriggerte azyklische Telegramme hervorgerufen werden können, zuverlässig vermieden.

In der als Beispiel herangezogenen Datenkommunikation zwischen dem Master-Teilnehmer M und den Slave-Teilnehmern im dritten Netzwerksegment S2 sind bei der in Fig. 1 gezeigten Beispielkonfiguration drei Verteilerknoten CU1, CU2, CU3 zwischen dem ersten Netzwerksegment M1 mit dem Master-Teilnehmer M und dem dritten Netzwerksegment S2 vorgesehen. Der vom Master-Teilnehmer M dem EtherCAT-Telegramm vorangestellte Routing-Header enthält dann für jeden der drei Verteilerknoten CU1, CU2, CU3 einen eigenen Datenabschnitt.

In dem jeweiligen Datenabschnitt ist dann eine Weiterleitungsinformation für den zugeordneten Verteilerknoten CU1, CU2, CU3 enthalten, die dem Verteilerknoten CU1, CU2, CU3 vorgibt, auf welcher Ein-/Ausgabe-Schnittstelle das Telegramm auf dem Hinweg ausgegeben werden soll. Ferner ist eine Weiterleitungszeitinformation in dem Datenabschnitt enthalten, wann das Telegramm vom zugeordneten Verteilerknoten auf dem Rückweg weitergeleitet werden soll.

Neben einem Datenabschnitt für jeden Verteilerknoten CU1, CU2, CU3 enthält der Routing-Header für das EtherCAT-Telegramm einen den Datenabschnitten vorangestellten Steuerabschnitt, der eine eindeutige Telegrammkennung enthält sowie einen Zähler aufweist, der ausgehend vom Master-Teilnehmer M die Anzahl der vom Telegramm zu durchlaufenden Verteilerknoten CU1, CU2, CU3 bis zum dritten Netzwerksegment S2 mit den Slave-Teilnehmern anzeigt, im Bespiel also drei Verteilerknoten CU1, CU2, CU3.

Fig. 2A und Fig. 2B zeigen schematisch das erfindungsgemäße, erweiterte EtherCAT-Telegramm zum Datenaustausch zwischen dem Master-Teilnehmer M und den Slave-Teilnehmern im dritten Netzwerksegment S2, wobei Fig. 2A das Telegramm auf dem Hinweg und Fig. 2B das Telegramm auf dem Rückweg zeigt. In Fig. 2A wird dabei jeweils der Aufbau des Telegramms nach der Ausgabe durch den Master-Teilnehmer M und nach dem Durchlaufen durch die drei Verteilerknoten CU1, CU2, CU3 auf dem Hinweg und in Fig. 2B der Aufbau des Telegramms nach der Verarbeitung durch die Slave-Teilnehmer und nach dem Durchlaufen durch die drei Verteilerknoten CU1, CU2, CU3 auf dem Rückweg gezeigt.

Ein erster Telegrammaufbau T1 in Fig. 2A stellt dabei das Telegramm dar, wie es vom Master-Teilnehmer M auf das zugeordnete Netzwerksegment M1 ausgegeben, um über die erste Datenübertragungsstrecke D1 zur ersten Ein-/Ausgabe-Schnittstelle des ersten Verteilerknotens CU1 übertragen zu werden. Der dem EtherCAT-Telegramm ECAT vorangestellte Routing-Header weist einen Steuerabschnitt TEL auf, der eine Telegrammkennung und einen Zähler, der die Anzahl der zu durchlaufenden Verteilerknoten angibt, umfasst. An den Steuerabschnitt TEL im Routing-Header schließen sich drei Datenabschnitte D-CU1, D-CU2, D-CU3, einen Datenabschnitt für jeden der Verteilerknoten CU1, CU2, CU3 im Datenübertragungsweg an, wobei die Datenabschnitte in der Reihenfolge angeordnet sind, in der die Verteilerknoten CU1, CU2, CU3 durchlaufen werden.

Nachstehend ist in Tabellenform beispielhaft eine mögliche Byte-Struktur des Routing-Headers im ersten Telegrammaufbau T1 angegeben:

| Byte-Nummer | Header-Abschnitt | Bezeichnung |
|---|---|---|
| 0-5 | TEL | DEST-MAC-ID |
| 6-7 | TEL | TEL-ID |
| 8 | D-CU1 | CMD (Wert 1) |
| 9 | D-CU1 | PORT (CMD=1) |
| 10-11 | D-CU1 | RESERVE (CMD=1) |
| 12-15 | D-CU1 | SEND-BACK-TIME (CMD=1) |
| 16-23 | D-CU2 | Analog zu D-CU1 aufgebaut |
| 24-31 | D-CU3 | |

Die Bytes 0 bis 7 sind für den Steuerabschnitt TEL reserviert, wobei die Bytes 0 bis 5 die Kennungsinformation DEST-MAC-ID enthalten, die dem Verteilerknoten anzeigen, dass es sich um ein erweitertes EtherCAT-Telegramm handelt. Anhand der Kennungsinformation DEST-MAC-ID stellt der Verteilerknoten fest, dass das Telegramm einen Datenabschnitt im Routing-Header aufweist, der dem Verteilerknoten zugeordnet ist.

Ein Byte der Kennungsinformation DEST-MAC-ID bildet einen Zähler, der ausgehend vom Master-Teilnehmer M die Anzahl der vom Telegramm zu durchlaufenden Verteilerknoten bis zum Netzwerksegment mit den Slave-Teilnehmern anzeigt.

Weiterhin zeigt die Kennungsinformation DEST-MAC-ID dem Verteilerknoten an, dass eine Telegrammkennung zur Identifizierung des Telegramms folgt. Die Telegrammidentifizierung ist dann in den Bytes 6 und 7 im Steuerabschnitt TEL enthalten und wird als TEL-ID bezeichnet.

An den Steuerabschnitt TEL schließen sich dann jeweils die Datenabschnitte für die einzelnen Verteilerknoten an, die jeweils 8 Bytes lang sind. Die Tabelle gibt den Inhalt der Bytes 8 bis 15, die den Datenabschnitt D-CU1 für den ersten Verteilerknoten CU1 bilden, im Detail an. Die Bytes 16 bis 23 für den Datenabschnitt D-CU2 des zweiten Verteilerknotens CU2 und die Bytes 24 bis 31 für den Datenabschnitt D-CU3 des dritten Verteilerknotens CU3 sind dann analog aufgebaut.

Das Byte 8 im Datenabschnitt D-CU1 für den ersten Verteilerknoten CU1 ist ein Kommando-Byte CMD, das die Bedeutung der weiteren Bytes im Datenabschnitt festlegt, wobei das Kommando-Byte CMD auf den Wert "1" gesetzt ist.

Das Byte 9 des Datenabschnitts D-CU1 für den ersten Verteilerknoten CU1 gibt dann, also wenn das Kommando-Byte CMD den Wert "1" hat, die Ein-/Ausgabe-Schnittstelle, auch als PORT bezeichnet, an, über die das Telegramm vom Verteilerknoten CU1 auf dem Hinweg ausgeben werden soll. Die Bytes 10 und 11 sind als Reserve-Bytes vorgesehen und können beispielsweise zusätzliche Steuerinformationen für den Verteilerknoten CU1 enthalten.

Die Bytes 12 bis 15 geben, wenn das Kommando-Byte CMD den Wert "1" hat, eine Weiterleitungszeitinformation an, die festlegt, wann das Telegramm vom Verteilerknoten CU1 auf dem Rückweg auf die erste Ein-/Ausgabe-Schnittstelle, die zum ersten Netzwerksegment M1 mit dem Master-Teilnehmer M führt, ausgegeben werden soll. Diese Weiterleitungszeitinformation kann dabei in Form einer Zeitangabe erfolgen, die die relative Zeit bezogen auf die Empfangszeit des Telegramms durch den Verteilerknoten CU1 auf dem Hinweg angibt, zu der das Telegramm auf dem Rückweg dann vom Verteilerknoten CU1 weitergeleitet werden soll. Statt einer relativen Zeitangabe kann auch eine absolute Zeitangabe erfolgen, wenn zusätzlich eine Zeitsynchronisation zwischen dem Master-Teilnehmer M und den Verteilerknoten CU1, CU2, CU3 erfolgt. Es besteht auch die Möglichkeit, statt einen Zeitpunkt festzulegen, anzugeben, festzulegen, dass das Telegramm immer sofort, also ohne Verzögerung, weitergeleitet werden soll.

Das vom Master-Teilnehmer M ausgegebene Telegramm mit dem ersten Telegrammaufbau T1 wird dann, wie oben beschrieben, auf dem Hinweg von dem ersten Verteilerknoten CU1 empfangen. Der Verteilerknoten CU1 stellt fest, dass das Telegramm einen dem eigentlichen EtherCAT-Telegramm ECAT vorangestellten Routing-Header aufweist und wertet dann den Routing-Header, beginnend mit der Kennungsinformation DEST-MAC-ID im Steuerabschnitt TEL aus.

Anhand des Zählers in der Kennungsinformation DEST-MAC-ID im Steuerabschnitt TEL erkennt der erste Verteilerknoten CU1, dass noch zwei weitere Verteilerknoten folgen, wobei der Zähler dabei die Anzahl der vom Telegramm insgesamt zu durchlaufenden Verteilerknoten bis zum dritten Netzwerksegment S2 mit dem Slave-Teilnehmer, also im Beispielsfall drei Verteilerknoten, anzeigt.

Der erste Verteilerknoten CU1 dekrementiert dann den Zähler in der Kennungsinformation DEST-MAC-ID im Steuerabschnitt TEL des Routing-Headers und entnimmt den dem ersten Verteilerknoten zugeordneten Datenabschnitt D-CU1, der auf den Steuerabschnitt TEL im Routing-Header folgt, aus dem Telegramm. Der erste Verteilerknoten CU1 legt den aus dem Telegramm entnommenen Datenabschnitt D-CU1 in seinem Speicher ab, wobei der erste Verteilerknoten CU1 zusätzlich die Telegrammkennung TEL-ID aus dem Steuerabschnitt TEL und die erste Ein-/Ausgabe-Schnittstelle, auf der das Telegramm empfangen wurde, abspeichert.

Gleichzeitig leitet der erste Verteilerknoten CU1 das um den entnommenen Datenabschnitt D-CU1 verkürzte Telegramm, das in Fig. 2A als zweiter Telegrammaufbau T2 gezeigt ist, über die im Datenabschnitt D-CU1 angegebene dritte Ein-/AusgabeSchnittstelle des ersten Verteilerknotens CU1 weiter. Das verkürzte Telegramm wird dann über die dritte Datenübertragungsstrecke D3 und die erste Ein-/Ausgabe-Schnittstelle des zweiten Verteilerknotens CU2 an diesen übertragen und vom diesem empfangen.

Der zweite Verteilerknoten CU2 verarbeitet das verkürzte Telegramm mit dem zweiten Telegrammaufbau T2 analog zu der Verarbeitung des Telegramms mit dem ersten Telegrammaufbau T1 in dem ersten Verteilerknoten CU1. Dabei wertet der zweite Verteilerknoten CU2 den dem eigentlichen EtherCAT-Telegramm ECAT vorangestellten Routing-Header aus und stellt anhand des Zählers in der Kennungsinformation DEST-MAC-ID im Steuerabschnitt TEL fest, dass noch ein weiterer Verteilerknoten folgt. Der Verteilerknoten CU2 dekrementiert dann den Zähler in der Kennungsinformation DEST-MAC-ID im Steuerabschnitt TEL des Routing-Headers und entnimmt den dem zweiten Verteilerknoten CU2 zugeordneten Datenabschnitt D-CU2, der auf den Steuerabschnitt TEL im Routing-Header des verkürzten Telegramms folgt.

Der zweite Verteilerknoten CU2 speichert den zugeordneten Datenabschnitt D-CU2 in seinem Speicher ab, wobei zusätzlich die Telegrammkennung TEL-ID aus dem Steuerabschnitt TEL und die Ein-/Ausgabe-Schnittstelle, auf der das verkürzte Telegramm empfangen wurde, im Speicher des zweiten Verteilerknotens CU2 festgehalten werden. Der zweite Verteilerknoten CU2 leitet dann das nochmals verkürzte Telegramm, das in Fig. 2A als dritter Telegrammaufbau T3 dargestellt ist, auf der im zugeordneten Datenabschnitt D-CU2 angegebenen zweiten Ein-/Ausgabe-Schnittstelle des zweiten Verteilerknotens CU2 weiter. Das nochmals verkürzte Telegramm wird dann über die vierte Datenübertragungsstrecke D4 und die erste Ein-/Ausgabe-Schnittstelle des dritten Verteilerknotens CU3 an diesen übertragen und vom diesem empfangen.

Der dritte Verteilerknoten CU3, in dem nun das nochmals verkürzte Telegramm mit dem dritten Telegrammaufbau T3 vorliegt, geht wieder analog zu der Verarbeitung des Telegramms mit dem ersten Telegrammaufbau T1 in dem ersten Verteilerknoten CU1 beziehungsweise analog zu der Verarbeitung des verkürzten Telegramms mit dem zweiten Telegrammaufbau T2 in dem zweiten Verteilerknoten CU2 vor, und wertet den Routing-Header des nochmals verkürzten Telegramms beginnend mit der Kennungsinformation DEST-MAC-ID im Steuerabschnitt TEL aus. Der dritte Verteilerknoten CU3 stellt dabei anhand des Zählers in der Kennungsinformation DEST-MAC-ID des Steuerabschnitts TEL fest, dass kein weiterer Verteilerknoten folgt. Der dritte Verteilerknoten CU3 entnimmt deshalb nicht nur den zugeordneten Datenabschnitt D-CU3, der auf den Steuerabschnitt TEL im Routing-Header folgt, aus dem nochmals verkürzten Telegramm, sondern zusätzlich auch den Steuerabschnitt TEL, so dass der ganze Routing-Header aus dem nochmals verkürzten Telegramm entfernt und das Telegramm auf das EtherCAT-Telegramm ECAT reduziert ist, wie in Fig. 2A der vierte Telegrammaufbau T4 zeigt.

Der dritte Verteilerknoten CU3 legt in seinem Speicher den aus dem nochmals verkürzten Telegramm entnommenen Datenabschnitt D-CU3, die Telegrammkennung TEL-ID und die Ein-/Ausgabe-Schnittstelle, auf der das nochmals verkürzte Telegramm empfangen wurde, ab. Ferner speichert der dritte Verteilerknoten CU3 eine weitere Steuerinformation aus dem EtherCAT-Telegramm ECAT ab, die zur Identifizierung des EtherCAT-Telegramm ECAT verwendet werden kann. Hierzu kann der dritte Verteilerknoten CU3 beispielsweise die DEST-MAC-ID (ECAT), die im EtherCAT-Telegramm ECAT selbst enthalten ist, nutzen.

Gleichzeitig gibt der dritte Verteilerknoten CU3 das um den kompletten Routing-Header verkürzte Telegramm gemäß dem vierten Telegrammaufbau T4, also das EtherCAT-Telegramm ECAT, über die zweite Ein-/Ausgabe-Schnittstelle des dritten Verteilerknotens CU3 aus.

Das dritte Netzwerksegment S2 mit seinen Slave-Teilnehmern bildet ausgehend von der zweiten Ein-/Ausgabe-Schnittstelle an dem dritten Verteilerknoten CU3 in Verbindung mit der sechsten Datenübertragungsstrecke D6 einen geschlossenen Datenpfad bzw. Datenübertragungsweg mit einem Hin- und einem Rückkanal. Das Telegramm mit dem EtherCAT-Telegramm ECAT wird auf dem dritten Netzwerksegment S2 im Durchlauf von den Slave-Teilnehmern, in der Regel auf dem Hinkanal verarbeitet. Die Verarbeitung des EtherCAT-Telegramm ECAT kann aber auch auf dem Rückkanal oder sowohl auf dem Hin- wie dem Rückkanal erfolgen.

Die Slave-Teilnehmer entnehmen die dem jeweiligen Slave-Teilnehmer vom Master-Teilnehmer M zugeordneten Ausgangsdaten aus dem EtherCAT-Telegramm ECAT beziehungsweise fügen im Gegenzug Eingangsdaten für den Master-Teilnehmer M in das EtherCAT-Telegramm ECAT ein, je nachdem ob ein Lesevorgang, ein Schreibvorgang oder ein Lese-/ Schreibvorgang ausgeführt werden soll.

Nach der Verarbeitung des EtherCAT-Telegramms ECAT durch die Slave-Teilnehmer im dritten Netzwerksegment S2 liegt das EtherCAT-Telegramm ECAT gemäß dem vierten Telegrammaufbau T4 dann wieder an der zweiten Ein-/Ausgabe-Schnittstelle des dritten Verteilerknotens CU3 an. In Fig. 2B ist nochmals das Telegramm mit dem EtherCAT-Telegramm ECAT gemäß dem vierten Telegrammaufbau T4 gezeigt, das nach der Verarbeitung durch die Slave-Teilnehmer im dritten Netzwerksegment S2 auf dem Rückkanal an der zweiten Ein-/Ausgabe-Schnittstelle des dritten Verteilerknotens CU3 ankommt.

Auf dem Rückweg des Telegramms zum Master-Teilnehmer M wird das Telegramm nun wieder mit dem Routing-Header ergänzt, den die in umgekehrter Reihenfolge zu durchlaufenden drei Verteilerknoten CU3, CU2, CU1 dabei sukzessive bei der Telegramm-Durchleitung dem Telegramm hinzufügen.

Der dritte Verteilerknoten CU3, der das verarbeitete Telegramm, wie zuvor beschrieben, über seine zweite Ein-/AusgabeSchnittstelle empfangen hat, identifiziert das Telegramm gemäß dem vierten Telegrammaufbau T4. Zur Telegrammidentifizierung nutzt der dritte Verteilerknoten CU3 die zusätzlich abgespeicherte Steuerinformation des EtherCAT-Telegramms ECAT, beispielsweise die DEST-MAC-ID (ECAT), die im EtherCAT-Telegramm ECAT selbst enthalten ist.

Der dritte Verteilerknoten CU3 ergänzt dann das EtherCAT-Telegramm ECAT um den Steuerabschnitt TEL, der die Kennungsinformation DEST-MAC-ID, die dem Verteilerknoten anzeigt, dass das Telegramm einen Datenabschnitt im Routing-Header aufweist, der dem Verteilerknoten zugeordnet ist, und die Telegrammidentifizierung TEL-ID enthält. In der Kennungsinformation DEST-MAC-ID inkrementiert der dritte Verteilerknoten CU3 dabei den Zähler, der die Anzahl der vom Telegramm insgesamt durchlaufenen Verteilerknoten anzeigt.

Außerdem fügt der dritten Verteilerknoten CU3 nach dem Steuerabschnitt TEL einen Datenabschnitt D-CU3* in das Telegramm ein, wobei das Kommando-Byte CMD, das die Bedeutung der weiteren Bytes im Datenabschnitt festlegt, auf den Wert "2" gesetzt ist. Damit wird angezeigt, dass die nachfolgenden Bytes im Datenabschnitt D-CU3* auf dem Rückweg gegenüber dem Datenabschnitt D-CU3 auf dem Hinweg anders zu interpretieren sind.

Der dritte Verteilerknoten CU3 gibt dann das ergänzte Telegramm, das den in Fig. 2B gezeigten fünften Telegrammaufbau T5 hat, auf der gespeicherten ersten Ein-/Ausgabe-Schnittstelle aus, auf der das nochmals verkürzte Telegramm mit dem dritten Telegrammaufbau T3 auf dem Hinweg empfangen wurde. Den Weiterleitungszeitpunkt für das ergänzte Telegramm bestimmt der dritte Verteilerknoten CU3 dabei auf der Grundlage der gespeicherten Weiterleitungsinformation, die der dritte Verteilerknoten CU3 auf dem Hinweg dem zugeordneten Datenabschnitt D-CU3 entnommen hat.

Das ergänzte Telegramm mit dem Routing-Header, der den Steuerabschnitt TEL und den Datenabschnitt D-CU3* umfasst, wird dann über die vierten Datenübertragungsstrecke D4 zur zweiten Ein-/Ausgabe-Schnittstelle des zweiten Verteilerknotens CU2 übertragen. Der zweite Verteilerknoten CU2 verarbeitet dann den Routing-Header im ergänzten Telegramm weiter, indem der zweite Verteilerknoten CU2 im Steuerabschnitt TEL den Zähler wiederum inkrementiert. Ferner fügt der zweite Verteilerknoten CU2 einen weiteren Datenabschnitt D-CU2* hinter dem Steuerabschnitt TEL und vor dem Datenabschnitt D-CU3* in den Routing-Header ein, bei dem das Kommando-Byte CMD, das die Bedeutung der weiteren Bytes im Datenabschnitt festlegt, wiederum auf den Wert "2" gesetzt ist.

Der zweite Verteilerknoten CU2 leitet das nochmals ergänzte Telegramm, das den in Fig. 2B gezeigten sechsten Telegrammaufbau T6 hat, dann auf der gespeicherten ersten Ein-/Ausgabe-Schnittstelle, auf der das verkürzte Telegramm auf dem Hinweg empfangen wurde, weiter, wobei der Weiterleitungszeitpunkt durch die Weiterleitungsinformation, die auf dem Hinweg dem Datenabschnitt D-CU2 entnommen wurde, festgelegt ist.

Der erste Verteilerknoten CU1 empfängt dann das über die dritte Datenübertragungsstrecke D3 und die dritte Ein-/Ausgabe-Schnittstelle des ersten Verteilerknotens CU1 übertragene nochmals ergänzte Telegramm. Der erste Verteilerknoten CU1 geht dann in analoger Weise wie der zweite Verteilerknoten CU2 bei der Bearbeitung des ergänzten Telegramms vor und inkrementiert nach Auswertung des Steuerabschnittes TEL im nochmals ergänzten Telegramm den Zähler im Steuerabschnitt TEL. Weiterhin ergänzt der erste Verteilerknoten CU1 den Routing-Header mit einem Datenabschnitt D-CU1*, bei dem der Wert des Kommando-Bytes CMD auf "2" gesetzt ist, wobei der Datenabschnitt D-CU1* direkt nach dem Steuerabschnitt TEL und vor den anderen Datenabschnitten D-CU2*, D-CU3* in den Routing-Header eingefügt wird.

Der erste Verteilerknoten CU1 gibt das vollständige Telegramm, das in Fig. 2B als siebter Telegrammaufbau T7 gezeigt ist, auf der gespeicherten ersten Ein-/Ausgabe-Schnittstelle aus. Das Telegramm ist nun wieder vollständig und entspricht im Aufbau dem Telegramm mit dem ersten Telegrammaufbau T1. Der Weiterleitungszeitpunkt für das vollständige Telegramm ist durch die Weiterleitungsinformation, die auf dem Hinweg dem Datenabschnitt D-CU1 entnommen wurde, festgelegt.

Der Master-Teilnehmer M kann dann das vollständige Telegramm über die erste Datenübertragungsstrecke D1 empfangen und weiter verarbeiten.

In der nachfolgenden Tabelle ist der Routing-Header des Telegramms gemäß dem Telegrammaufbau T7 gezeigt.

| Byte-Nummer | Header-Abschnitt | Bezeichnung |
|---|---|---|
| 0-5 | TEL | DEST-MAC-ID |
| 6-7 | TEL | TEL-ID |
| 8 | D-CU1 | CMD (Wert 2) |
| 9-11 | D-CU1 | RESERVE (CMD=2) |
| 12-15 | D-CU1 | RECEIVE-TIME (CMD=2) |
| 16-23 | D-CU2 | Analog zu D-CU1 aufgebaut |
| 24-31 | D-CU3 | |

Die Byte-Struktur des Routing-Headers im vom Master-Teilnehmer M empfangenen vollständigen Telegramm entspricht dabei der Byte-Struktur des Routing-Headers im vom Master-Teilnehmer M gesendeten Telegramm, wobei der Steuerabschnitt TEL identisch ist und als Byte 0 bis 5 die Kennungsinformation DEST-MAC-ID aufweist, bei der der enthaltene Zähler die Anzahl der durchlaufenen Verteilerknoten, also drei Verteilerknoten anzeigt. Die Bytes 6 und 7 im Steuerabschnitt TEL geben die Telegrammkennung TEL-ID an, die das Telegramm identifiziert.

Daran schließen sich dann im Routing-Header die Datenabschnitte D-CU1, D-CU2, D-CU3 der Verteilerknoten CU1, CU2, CU3 an, wobei der erste Verteilerknoten CU1 die Bytes 8 bis 15, der zweite Verteilerknoten CU2 die Bytes 16 bis 25 und der dritte Verteilerknoten CU3 die Bytes 24 bis 31 belegt.

Für den Datenabschnitt D-CU1 des ersten Verteilerknotens CU1 ist detailliert die Byte-Struktur angegeben. Byte 8 gibt die Kommandoinformation CMD an, welche die Bedeutung der folgenden Bytes im Routing-Header zeigt. Der Wert 2 der Kommandoinformation CMD gibt dabei an, dass die Bytes 9 bis 11 Reservedaten sind und die Bytes 12 bis 15 die Empfangszeit im ersten Verteilerknoten CU1 angeben, die als Zeitspanne angezeigt wird, die zwischen dem Empfang des Telegramms T1 auf dem Hinweg und dem Empfang des Telegramms auf dem Rückweg verstrichen ist. Statt einer relativen Zeitangabe kann auch eine absolute Zeitangabe erfolgen, wenn zusätzlich eine Zeitsynchronisation zwischen dem Master-Teilnehmer M und den Verteilerknoten CU1, CU2, CU3 erfolgt.

Der vorstehend erläuterte Datenaustausch ist für das EtherCAT-Protokoll optimiert, bei dem das Telegramm von den Slave-Teilnehmern nur ohne den Routing-Header verarbeitet werden kann. Der Routing-Header wird deshalb, wie vorstehend erläutert, von den zu durchlaufenden Verteilerknoten auf dem Hinweg sukzessive aus dem Telegramm entfernt und zwischengespeichert, um dann auf dem Rückweg in das Telegramm wieder eingefügt zu werden. Die Verteilerknoten bestimmen dabei den Weiterleitungszeitpunkt für das Telegramm auf dem Rückweg auf der Grundlage der Weiterleitungszeitinformation, die in dem, dem jeweiligen Verteilerknoten zugeordneten Datenabschnitt im Routing-Header angegeben ist.

Wenn anstelle des EtherCAT-Protokolls jedoch ein Protokoll zum Datenaustausch verwendet wird, bei dem die Slave-Teilnehmer auch den Routing-Header verarbeiten können, ist es nicht erforderlich, dass die Verteilerknoten auf dem Hinweg den zugeordneten Datenabschnitt aus dem Routing-Header beziehungsweise der letzte Verteilerknoten vor den Slave-Teilnehmern dann ganzen verbleibenden Routing-Header entfernt. Der Routing-Header kann dann immer am Telegramm verbleiben und wird von den Verteilerknoten nur ausgewertet.

Auch besteht die Möglichkeit, bei einem entsprechend ausgelegten Protokoll zum Datenaustausch und entsprechenden ausgebildeten Slave-Teilnehmern, dass die Slave-Teilnehmer den vom Master-Teilnehmer mit dem Telegramm mitgeschickten Routing-Header auswerten und dann in ein eigenes Telegramm umsetzen, um es an den Master-Teilnehmer zu übermitteln.

Grundsätzlich ist für die vom Telegramm zu durchlaufenden Verteilerknoten eine Weiterleitungszeitinformation, die angibt, wann das Telegramm auf der Ein-/Ausgabe-Schnittstelle ausgegeben werden soll, nur für den Rückweg von den Slave-Teilnehmern zum Master-Teilnehmer erforderlich. Kollisionen zwischen Telegrammen können so nämlich auf dem Rückweg vermieden werden, da der Master-Teilnehmer die Telegrammausgabe so steuern kann, dass keine Kollisionen auftreten. Es besteht jedoch auch die Möglichkeit, um einen optimierten Telegrammdurchsatz im Verteilerknoten zu bewirken, dass eine Weiterleitungszeitinformation für die Verteilerknoten auch für die Telegrammausgabe über die Ein-/Ausgabe-Schnittstelle auf dem Hinweg mitgeschickt wird.

## Patentansprüche

1. Verfahren zur Datenübertragung in einem Kommunikationsnetzwerk mit wenigstens einem Verteilerknoten (CU1, CU2, CU3, CU4), der mehrere Ein-/Ausgabe-Schnittstellen aufweist, die jeweils mit einem Netzwerksegment (M1, S1, S2, S3, S4, S5) in Verbindung steht, wobei in einem ersten Netzwerksegment (M1) ein erster Teilnehmer und in einem zweiten Netzwerksegment (S1, S2, S3, S4, S5) zumindest ein zweiter Teilnehmer angeordnet sind,
wobei ein Datenaustausch zwischen den Teilnehmern in Form von Telegrammen erfolgt, ,
wobei den von dem zweiten Teilnehmer an den ersten Teilnehmer zu übermittelnden Telegrammen jeweils Steuerdaten zugeordnet sind, die eine Weiterleitungszeitinformation enthalten, wann das entsprechende Telegramm vom Verteilerknoten (CU1, CU2, CU3, CU4) über die Ein-/AusgabeSchnittstelle in Richtung zum ersten Netzwerksegment (M1) mit dem ersten Teilnehmer ausgeben werden soll,
**dadurch gekennzeichnet, dass**
der erste Teilnehmer ein Master-Teilnehmer (M) und der zweite Teilnehmer ein Slave-Teilnehmer ist, wobei der Datenaustausch vom Master-Teilnehmer (M) angestoßen wird und die Telegramme von dem Slave-Teilnehmer an den Master-Teilnehmer auf Anfrage des Master-Teilnehmers übermittelt werden, wobei die Weiterleitungszeitinformation für die von dem Slave-Teilnehmer an den Master-Teilnehmer übermittelten Telegramme vom Master-Teilnehmer (M) festgelegt wird, im dem die den Telegrammen jeweils zugeordneten Steuerdaten, die die Weiterleitungszeitinformation enthalten, bei der Anfrage vom Master-Teilnehmer erzeugt werden und in der Anfrage enthalten sind.

2. Verfahren nach Anspruch 1, wobei die Telegramme auf einem geschlossenen Datenübertragungsweg ausgehend vom Master-Teilnehmer (M) zum Slave-Teilnehmer, also auf einem Hinweg, und zurück, also auf einem Rückweg, übertragen werden, wobei der Master-Teilnehmer (M) für jedes von dem Slave-Teilnehmer an den Master-Teilnehmer (M) zu übermittelnde Telegramm einen Daten-Kopfsatz erzeugt, der einen Steuerabschnitt (TEL) und daran anschließend pro zu durchlaufendem Verteilerknoten einen Datenabschnitt (D-CU1, D-CU2, D-CU3) aufweist,
wobei der Steuerabschnitt (TEL) eine Telegrammkennung enthält, und
wobei der dem Verteilerknoten (CU1, CU2, CU3, CU4) zugeordnete Datenabschnitt (D-CU1, D-CU2, D-CU3) eine Weiterleitungsinformation für das Telegramm enthält, die die Zuordnung der Ein-/Ausgabe-Schnittstelle, an die das erste Netzwerksegment (M1) mit dem Master-Teilnehmer (M) angeschlossen ist, und der Ein-/Ausgabe-Schnittstelle, an die das zweite Netzwerksegment (S1, S2, S3, S4, S5) mit dem Slave-Teilnehmer angeschlossen ist, ermöglicht, und die die Weiterleitungszeitinformation enthält, wann das Telegramm vom Verteilerknoten (CU1, CU2, CU3, CU4) über die Ein-/Ausgabe-Schnittstelle in Richtung zum ersten Netzwerksegment (M1) mit dem Master-Teilnehmer (M) ausgegeben werden soll.

3. Verfahren nach Anspruch 2, wobei der Steuerabschnitt (TEL) des Telegramms einen Zähler aufweist, der ausgehend vom Master-Teilnehmer (M) die Anzahl der vom Telegramm zu durchlaufenden Verteilerknoten (CU1, CU2, CU3, CU4) bis zum Slave-Teilnehmer anzeigt, wobei der Verteilerknoten (CU1, CU2, CU3, CU4) beim Telegrammdurchlauf auf dem Hinweg vom Master-Teilnehmer (M) zum Slave-Teilnehmer den Zähler dekrementiert und auf dem Rückweg vom Slave-Teilnehmer zum Master-Teilnehmer (M) den Zähler inkrementiert.

4. Verfahren nach Anspruch 3, wobei der Verteilerknoten (CU1, CU2, CU3, CU4) auf dem Hinweg des Telegramms vom Master-Teilnehmer (M) zum Slave-Teilnehmer beim Telegrammdurchlauf den ihm zugeordneten Datenabschnitt (D-CU1, D-CU2, D-CU3) aus dem Daten-Kopfsatz des Telegramms und dann, wenn der Zähler anzeigt, dass kein weiterer Verteilerknoten (CU1, CU2, CU3, CU4) zu durchlaufen ist, zusätzlich den Steuerabschnitt (TEL) aus dem Daten-Kopfsatz des Telegramms herausnimmt, und wobei der Verteilerknoten (CU1, CU2, CU3, CU4) auf dem Rückweg des Telegramms vom Slave-Teilnehmer zum Master-Teilnehmer (M) beim Telegrammdurchlauf den ihm zugeordneten Datenabschnitt (D-CU1*, D-CU2*, D-CU3*) in den Daten-Kopfsatz des Telegramms, und dann, wenn das Telegramm keinen Steuerabschnitt (TEL) aufweist, zusätzlich den Steuerabschnitt (TEL) in den Daten-Kopfsatz des Telegramms einfügt.

5. Verfahren nach Anspruch 4, wobei der Datenabschnitt im Daten-Kopfsatz des Telegramms eine Kommandoinformation enthält, die die Bedeutung der weiteren Daten im Datenabschnitt festlegt, wobei die Kommandoinformation auf dem Hinweg des Telegramms vom Master-Teilnehmer (M) zum Slave-Teilnehmer dem Verteilerknoten (CU1, CU2, CU3, CU4) anzeigt, dass die weiteren Daten die Weiterleitungsinformation und die Weiterleitungszeitinformation umfassen.

6. Verfahren nach Anspruch 5, wobei die Kommandoinformation auf dem Rückweg des Telegramms vom Slave-Teilnehmer zum Master-Teilnehmer (M) anzeigt, dass die weiteren Daten eine Diagnoseinformation umfassen.

7. Kommunikationsnetzwerk mit einem ersten Netzwerksegment (M1), in dem ein erster Teilnehmer angeordnet ist, und zumindest einem zweiten Netzwerksegment (S1, S2, S3, S4, S5), in dem zumindest ein zweiter Teilnehmer angeordnet ist, und wenigstens einem Verteilerknoten (CU1, CU2, CU3, CU4), der mehrere Ein-/Ausgabe-Schnittstellen aufweist, wobei an eine erste Ein-/Ausgabe-Schnittstelle mit dem ersten Netzwerksegment (M1) und eine zweite Ein-/Ausgabe-Schnittstelle mit dem zweiten Netzwerksegment (S1, S2, S3, S4, S5) in Verbindung steht,
wobei den von dem zweiten Teilnehmer an den ersten Teilnehmer (M) zu übermittelnden Telegrammen jeweils Steuerdaten zugeordnet sind, die eine Weiterleitungszeitinformation enthalten, wann das entsprechende Telegramm vom Verteilerknoten (CU1, CU2, CU3, CU4) über die Ein-/Ausgabe-Schnittstelle in Richtung zum ersten Netzwerksegment (M1) mit dem ersten Teilnehmer (M) ausgeben werden soll, **dadurch gekennzeichnet, dass**
der erste Teilnehmer ein Master-Teilnehmer (M) und der zweite Teilnehmer ein Slave-Teilnehmer ist, wobei der Master-Teilnehmer (M) ausgelegt ist, den Datenaustausch mit dem Slave-Teilnehmer anzustoßen, in dem die Telegramme von dem Slave-Teilnehmer an den Master-Teilnehmer auf Anfrage des Master-Teilnehmers übermittelt werden, wobei der Master-Teilnehmer (M) ausgelegt ist, die Weiterleitungszeitinformation für die von dem Slave-Teilnehmer an den Master-Teilnehmer übermittelten Telegramme festzulegen, im dem die den Telegrammen jeweils zugeordneten Steuerdaten, die die Weiterleitungszeitinformation enthalten, bei der Anfrage vom Master-Teilnehmer erzeugt werden und in der Anfrage enthalten sind.

8. Kommunikationsnetzwerk nach Anspruch 7, wobei die Telegramme auf einem geschlossenen Datenübertragungsweg ausgehend vom Master-Teilnehmer (M) zum Slave-Teilnehmer, also auf einem Hinweg, und zurück, also auf einem Rückweg, übertragen werden,
wobei der Master-Teilnehmer (M) so ausgelegt ist, dass er für jedes von dem Slave-Teilnehmer an den Master-Teilnehmer (M) zu übermittelnde Telegramm einen Daten-Kopfsatz erzeugt, der einen Steuerabschnitt (TEL) und daran anschließend pro zu durchlaufendem Verteilerknoten (CU1, CU2, CU3, CU4) einen Datenabschnitt (D-CU1, D-CU2, D-CU3) aufweist,
wobei der Steuerabschnitt (TEL) eine Telegrammkennung enthält, und
wobei der dem Verteilerknoten zugeordnete Datenabschnitt (D-CU1, D-CU2, D-CU3) eine Weiterleitungsinformation für das Telegramm enthält, die die Zuordnung der Ein-/Ausgabe-Schnittstelle, an die das erste Netzwerksegment (M1) mit dem Master-Teilnehmer (M) angeschlossen ist, und der Ein-/Ausgabe-Schnittstelle, an die das zweite Netzwerksegment (S1, S2, S3, S4, S5) mit dem Slave-Teilnehmer angeschlossen ist, ermöglicht, und die die Weiterleitungszeitinformation enthält, wann das Telegramm vom Verteilerknoten (CU1, CU2, CU3, CU4) über die Ein-/AusgabeSchnittstelle in Richtung zum ersten Netzwerksegment (M1) mit dem Master-Teilnehmer (M) ausgegeben werden soll.

9. Kommunikationsnetzwerk nach Anspruch 8, wobei der Steuerabschnitt (TEL) des Telegramms einen Zähler aufweist, der ausgehend vom Master-Teilnehmer (M) die Anzahl der vom Telegramm zu durchlaufenden Verteilerknoten (CU1, CU2, CU3, CU4) bis zum Slave-Teilnehmer anzeigt, wobei der Verteilerknoten (CU1, CU2, CU3, CU4) ausgelegt ist, beim Telegrammdurchlauf auf dem Hinweg vom Master-Teilnehmer (M) zum Slave-Teilnehmer den Zähler zu dekrementieren und auf dem Rückweg vom Slave-Teilnehmer zum Master-Teilnehmer (M) den Zähler zu inkrementieren.

10. Kommunikationsnetzwerk nach Anspruch 9, wobei der Verteilerknoten (CU1, CU2, CU3, CU4) ausgelegt ist, auf dem Hinweg des Telegramms vom Master-Teilnehmer (M) zum Slave-Teilnehmer beim Telegrammdurchlauf den jeweils zugeordneten Datenabschnitt (D-CU1, D-CU2, D-CU3) aus dem Daten-Kopfsatz des Telegramms und dann, wenn der Zähler anzeigt, dass kein weiterer Verteilerknoten (CU1, CU2, CU3, CU4) zu durchlaufen ist, zusätzlich den Steuerabschnitt (TEL) aus dem Daten-Kopfsatz des Telegramms herauszunehmen, und wobei der Verteilerknoten (CU1, CU2, CU3, CU4) ausgelegt ist, auf dem Rückweg des Telegramms vom Slave-Teilnehmer zum Master-Teilnehmer (M) beim Telegrammdurchlauf den jeweils zugeordneten Datenabschnitt (D-CU1, D-CU2, D-CU3) in den Daten-Kopfsatz des Telegramms, und dann wenn das Telegramm keinen Steuerabschnitt (TEL) aufweist, zusätzlich den Steuerabschnitt (TEL) in den Daten-Kopfsatz des Telegramms einzufügen.

11. Kommunikationsnetzwerk nach einem der Ansprüche 7 bis 10, wobei das Automatisierungskommunikationsnetzwerk ein Ethernet-basiertes Feldbussystem, insbesondere ein EtherCAT-Feldbussystem ist.

## Claims

1. Method for transmitting data in a communication network having at least one distribution node (CU1, CU2, CU3, CU4) having a plurality of input/output interfaces each connected to a network segment (M1, S1, S2, S3, S4, S5), wherein a first subscriber is arranged in a first network segment (M1) and at least one second subscriber is arranged in a second network segment (S1, S2, S3, S4, S5),
wherein data are interchanged between the subscribers in the form of messages,
wherein control data containing an item of forwarding time information relating to when the corresponding message is intended to be output by the distribution node (CU1, CU2, CU3, CU4), via the input/output interface, in the direction of the first network segment (M1) containing the first subscriber are respectively assigned to the messages to be transmitted from the second subscriber to the first subscriber,
**characterized in that**
the first subscriber is a master subscriber (M) and the second subscriber is a slave subscriber, wherein data interchange is initiated by the master subscriber (M) and the messages are transmitted from the slave subscriber to the master subscriber on the request of the master subscriber, wherein the forwarding time information for the messages transmitted from the slave subscriber to the master subscriber is stipulated by the master subscriber (M) by virtue of the control data which are respectively assigned to the messages and contain the forwarding time information being generated in the request by the master subscriber and being included in the request.

2. Method according to Claim 1, wherein the messages are transmitted on a closed data transmission path starting from the master subscriber (M) to the slave subscriber, that is to say on an outgoing path, and are transmitted back, that is to say on a return path, wherein the master subscriber (M) generates, for each message to be transmitted from the slave subscriber to the master subscriber (M), a data header record having a control section (TEL) and, following the latter, a data section (D-CU1, D-CU2, D-CU3) for each distribution node to be passed through,
wherein the control section (TEL) contains a message identifier, and
wherein the data section (D-CU1, D-CU2, D-CU3) assigned to the distribution node (CU1, CU2, CU3, CU4) contains an item of forwarding information for the message, which information makes it possible to assign the input/output interface, to which the first network segment (M1) containing the master subscriber (M) is connected, and the input/output interface, to which the second network segment (S1, S2, S3, S4, S5) containing the slave subscriber is connected, and contains the forwarding time information relating to when the message is intended to be output by the distribution node (CU1, CU2, CU3, CU4), via the input/output interface, in the direction of the first network segment (M1) containing the master subscriber (M).

3. Method according to Claim 2, wherein the control section (TEL) of the message has a counter which, starting from the master subscriber (M), indicates the number of distribution nodes (CU1, CU2, CU3, CU4) to be passed through by the message until reaching the slave subscriber, wherein the distribution node (CU1, CU2, CU3, CU4) decrements the counter when messages pass through on the outgoing path from the master subscriber (M) to the slave subscriber and increments the counter on the return path from the slave subscriber to the master subscriber (M).

4. Method according to Claim 3, wherein the distribution node (CU1, CU2, CU3, CU4) removes the data section (D-CU1, D-CU2, D-CU3) assigned to it from the data header record of the message on the outgoing path of the message from the master subscriber (M) to the slave subscriber when messages pass through and, when the counter indicates that no further distribution node (CU1, CU2, CU3, CU4) needs to be passed through, additionally removes the control section (TEL) from the data header record of the message, and wherein the distribution node (CU1, CU2, CU3, CU4) inserts the data section (D-CU1*, D-CU2*, D-CU3*) assigned to it into the data header record of the message on the return path of the message from the slave subscriber to the master subscriber (M) when messages pass through and, when the message does not have a control section (TEL), additionally inserts the control section (TEL) into the data header record of the message.

5. Method according to Claim 4, wherein the data section in the data header record of the message contains an item of command information which stipulates the meaning of the further data in the data section, wherein, on the outgoing path of the message from the master subscriber (M) to the slave subscriber, the command information indicates to the distribution node (CU1, CU2, CU3, CU4) that the further data comprise the forwarding information and the forwarding time information.

6. Method according to Claim 5, wherein, on the return path of the message from the slave subscriber to the master subscriber (M), the command information indicates that the further data comprise an item of diagnostic information.

7. Communication network having a first network segment (M1), in which a first subscriber is arranged, and at least one second network segment (S1, S2, S3, S4, S5), in which at least one second subscriber is arranged, and at least one distribution node (CU1, CU2, CU3, CU4) having a plurality of input/output interfaces, wherein a first input/output interface is connected to the first network segment (M1) and a second input/output interface is connected to the second network segment (S1, S2, S3, S4, S5), wherein control data containing an item of forwarding time information relating to when the corresponding message is intended to be output by the distribution node (CU1, CU2, CU3, CU4), via the input/output interface, in the direction of the first network segment (M1) containing the first subscriber (M) are respectively assigned to the messages to be transmitted from the second subscriber to the first subscriber (M),
**characterized in that**
the first subscriber is a master subscriber (M) and the second subscriber is a slave subscriber, wherein the master subscriber (M) is designed to initiate data interchange with the slave subscriber by virtue of the messages being transmitted from the slave subscriber to the master subscriber on the request of the master subscriber, wherein the master subscriber (M) is designed to stipulate the forwarding time information for the messages transmitted from the slave subscriber to the master subscriber by virtue of the control data which are respectively assigned to the messages and contain the forwarding time information being generated in the request by the master subscriber and being included in the request.

8. Communication network according to Claim 7, wherein the messages are transmitted on a closed data transmission path starting from the master subscriber (M) to the slave subscriber, that is to say on an outgoing path, and are transmitted back, that is to say on a return path,
wherein the master subscriber (M) is designed such that it generates, for each message to be transmitted from the slave subscriber to the master subscriber (M), a data header record having a control section (TEL) and, following the latter, a data section (D-CU1, D-CU2, D-CU3) for each distribution node (CU1, CU2, CU3, CU4) to be passed through,
wherein the control section (TEL) contains a message identifier, and
wherein the data section (D-CU1, D-CU2, D-CU3) assigned to the distribution node contains an item of forwarding information for the message, which information makes it possible to assign the input/output interface, to which the first network segment (M1) containing the master subscriber (M) is connected, and the input/output interface, to which the second network segment (S1, S2, S3, S4, S5) containing the slave subscriber is connected, and contains the forwarding time information relating to when the message is intended to be output by the distribution node (CU1, CU2, CU3, CU4), via the input/output interface, in the direction of the first network segment (M1) containing the master subscriber (M).

9. Communication network according to Claim 8, wherein the control section (TEL) of the message has a counter which, starting from the master subscriber (M), indicates the number of distribution nodes (CU1, CU2, CU3, CU4) to be passed through by the message until reaching the slave subscriber, wherein the distribution node (CU1, CU2, CU3, CU4) is designed to decrement the counter when messages pass through on the outgoing path from the master subscriber (M) to the slave subscriber and to increment the counter on the return path from the slave subscriber to the master subscriber (M).

10. Communication network according to Claim 9, wherein the distribution node (CU1, CU2, CU3, CU4) is designed to remove the respectively assigned data section (D-CU1, D-CU2, D-CU3) from the data header record of the message on the outgoing path of the message from the master subscriber (M) to the slave subscriber when messages pass through and, when the counter indicates that no further distribution node (CU1, CU2, CU3, CU4) needs to be passed through, to additionally remove the control section (TEL) from the data header record of the message, and wherein the distribution node (CU1, CU2, CU3, CU4) is designed to insert the respectively assigned data section (D-CU1, D-CU2, D-CU3) into the data header record of the message on the return path of the message from the slave subscriber to the master subscriber (M) when messages pass through and, when the message does not have a control section (TEL), to additionally insert the control section (TEL) into the data header record of the message.

11. Communication network according to one of Claims 7 to 10, wherein the automation communication network is an Ethernet-based field bus system, in particular an EtherCAT field bus system.

## Revendications

1. Procédé de transmission de données dans un réseau de communication comprenant au moins un nœud de distribution (CU1, CU2, CU3, CU4) qui présente plusieurs interfaces d'entrée/sortie qui sont respectivement en communication avec un segment de réseau (M1, S1, S2, S3, S4, S5), un premier abonné étant disposé dans un premier segment de réseau (M1) et au moins un deuxième abonné étant disposé dans un deuxième segment de réseau (S1, S2, S3, S4, S5),
dans lequel un échange de données sous forme de télégrammes a lieu entre les abonnés,
dans lequel des données de commande sont respectivement associées aux télégrammes à transmettre du deuxième abonné au premier abonné, lesdites données contenant une information de temps de retransmission spécifiant quand le télégramme respectif doit être émis par le nœud de distribution (CU1, CU2, CU3, CU4) par l'intermédiaire de l'interface d'entrée/sortie en direction du premier segment de réseau (M1) avec le premier abonné,
**caractérisé en ce que**
le premier abonné est un abonné maître (M) et le deuxième abonné est un abonné esclave, l'échange de données étant initié par l'abonné maître (M) et les télégrammes étant transmis de l'abonné esclave à l'abonné maître à la demande de l'abonné maître, dans lequel l'information de temps de retransmission pour les télégrammes transmis de l'abonné esclave à l'abonné maître est établie par l'abonné maître (M), dans lequel les données de commande respectivement associées aux télégrammes et contenant l'information de temps de retransmission sont générées lors de la demande de l'abonné maître et sont contenues dans la demande.

2. Procédé selon la revendication 1, dans lequel les télégrammes sont transmis sur un chemin de transmission de données fermé en partant de l'abonné maître (M) jusqu'à l'abonné esclave, donc à l'aller, et en revenant, donc au retour, dans lequel l'abonné maître (M) génère pour chaque télégramme à transmettre de l'abonné esclave à l'abonné maître (M) un en-tête de données qui présente une partie de commande (TEL) et consécutive à celle-ci une partie de données (D-CU1, D-CU2, D-CU3) pour chaque nœud de distribution à passer,
la partie de commande (TEL) contenant un identifiant de télégramme, et
dans lequel la partie de données (D-CU1, D-CU2, D-CU3) associée au nœud de distribution (CU1, CU2, CU3, CU4) contient une information de retransmission pour le télégramme qui permet d'associer l'interface d'entrée/sortie à laquelle est connecté le premier segment de réseau (M1) avec l'abonné maître (M) à l'interface d'entrée/sortie à laquelle est connecté le deuxième segment de réseau (S1, S2, S3, S4, S5) avec l'abonné esclave, et qui contient l'information de temps de retransmission spécifiant quand le télégramme doit être émis par le nœud de distribution (CU1, CU2, CU3, CU4) par l'intermédiaire de l'interface d'entrée/sortie en direction du premier segment de réseau (M1) avec l'abonné maître (M).

3. Procédé selon la revendication 2, dans lequel la partie de commande (TEL) du télégramme présente un compteur qui, en partant de l'abonné maître (M), indique le nombre de nœuds de distribution (CU1, CU2, CU3, CU4) à passer par le télégramme jusqu'à l'abonné esclave, dans lequel le nœud de distribution (CU1, CU2, CU3, CU4) décrémente le compteur lors du passage de télégramme à l'aller de l'abonné maître (M) à l'abonné esclave et incrémente le compteur au retour de l'abonné esclave à l'abonné maître (M).

4. Procédé selon la revendication 3, dans lequel le nœud de distribution (CU1, CU2, CU3, CU4), à l'aller du télégramme de l'abonné maître (M) à l'abonné esclave, lors du passage de télégramme, extrait de l'en-tête de données du télégramme la partie de données (D-CU1, D-CU2, D-CU3) qui lui est associée, et ensuite, lorsque le compteur indique que plus aucun nœud de distribution (CU1, CU2, CU3, CU4) n'est à passer, il extrait de plus la partie de commande (TEL) de l'en-tête de données du télégramme, et dans lequel le nœud de distribution (CU1, CU2, CU3, CU4), au retour du télégramme de l'abonné esclave à l'abonné maître (M), lors du passage de télégramme, insère dans l'en-tête de données du télégramme la partie de données (D-CU1*, D-CU2*, D-CU3*) qui lui est associée, et ensuite, lorsque le télégramme ne présente aucune partie de commande (TEL), il insère de plus la partie de commande (TEL) dans l'en-tête de données du télégramme.

5. Procédé selon la revendication 4, dans lequel la partie de données contient dans l'en-tête de données du télégramme une information de commande qui établit la signification des autres données dans la partie de données, l'information de commande indiquant au nœud de distribution (CU1, CU2, CU3, CU4), à l'aller du télégramme de l'abonné maître (M) à l'abonné esclave, que les autres données comprennent l'information de retransmission et l'information de temps de retransmission.

6. Procédé selon la revendication 5, dans lequel l'information de commande, au retour du télégramme de l'abonné esclave à l'abonné maître (M), indique que les autres données comprennent une information de diagnostic.

7. Réseau de communication, comprenant un premier segment de réseau (M1) dans lequel est disposé un premier abonné, et au moins un deuxième segment de réseau (S1, S2, S3, S4, S5) dans lequel est disposé au moins un deuxième abonné, et au moins un nœud de distribution (CU1, CU2, CU3, CU4) qui présente plusieurs interfaces d'entrée/sortie, dans lequel une première interface d'entrée/sortie est en communication avec le premier segment de réseau (M1) et une deuxième interface d'entrée/sortie est en communication avec le deuxième segment de réseau (S1, S2, S3, S4, S5),
dans lequel des données de commande sont respectivement associées aux télégrammes à transmettre du deuxième abonné au premier abonné (M), lesdites données contenant une information de temps de retransmission spécifiant quand le télégramme respectif doit être émis par le nœud de distribution (CU1, CU2, CU3, CU4) par l'intermédiaire de l'interface d'entrée/sortie en direction du premier segment de réseau (M1) avec le premier abonné (M),
**caractérisé en ce que** le premier abonné est un abonné maître (M) et le deuxième abonné est un abonné esclave, dans lequel l'abonné maître (M) est conçu pour initier l'échange de données avec l'abonné esclave dans lequel les télégrammes sont transmis de l'abonné esclave à l'abonné maître à la demande de l'abonné maître, dans lequel l'abonné maître (M) est conçu pour établir l'information de temps de retransmission pour les télégrammes transmis de l'abonné esclave à l'abonné maître dans lequel les données de commande respectivement associées aux télégrammes et qui contiennent l'information de temps de retransmission sont générées lors de la demande de l'abonné maître et sont contenues dans la demande.

8. Réseau de communication selon la revendication 7, dans lequel les télégrammes sont transmis sur un chemin de transmission de données fermé en partant de l'abonné maître (M) jusqu'à l'abonné esclave, donc à l'aller, et en revenant, donc au retour,
dans lequel l'abonné maître (M) est conçu de telle sorte qu'il génère pour chaque télégramme à transmettre de l'abonné esclave à l'abonné maître (M) un en-tête de données qui présente une partie de commande (TEL), et ensuite, pour chaque nœud de distribution (CU1, CU2, CU3, CU4) à passer, une partie de données (D-CU1, D-CU2, D-CU3),
la partie de commande (TEL) contenant un identifiant de télégramme, et
dans lequel la partie de données (D-CU1, D-CU2, D-CU3) associée au nœud de distribution contient une information de retransmission pour le télégramme qui permet d'associer l'interface d'entrée/sortie à laquelle est connecté le premier segment de réseau (M1) avec l'abonné maître (M), et l'interface d'entrée/sortie à laquelle est connecté le deuxième segment de réseau (S1, S2, S3, S4, S5) avec l'abonné esclave, et qui contient l'information de temps de retransmission spécifiant quand le télégramme doit être émis par le nœud de distribution (CU1, CU2, CU3, CU4) par l'intermédiaire de l'interface d'entrée/sortie en direction du premier segment de réseau (M1) avec l'abonné maître (M).

9. Réseau de communication selon la revendication 8, dans lequel la partie de commande (TEL) du télégramme présente un compteur qui, en partant de l'abonné maître (M), indique le nombre des nœuds de distribution (CU1, CU2, CU3, CU4) à passer par le télégramme jusqu'à l'abonné esclave, dans lequel le nœud de distribution (CU1, CU2, CU3, CU4) est conçu pour décrémenter le compteur lors du passage de télégramme à l'aller de l'abonné maître (M) à l'abonné esclave, et pour incrémenter le compteur au retour de l'abonné esclave à l'abonné maître (M).

10. Réseau de communication selon la revendication 9, dans lequel le nœud de distribution (CU1, CU2, CU3, CU4) est conçu pour extraire de l'en-tête de données du télégramme, à l'aller du télégramme de l'abonné maître (M) à l'abonné esclave, lors du passage de télégramme, la partie de données (D-CU1, D-CU2, D-CU3) respectivement associée, et ensuite, lorsque le compteur indique que plus aucun nœud de distribution (CU1, CU2, CU3, CU4) n'est à passer, pour extraire de plus la partie de commande (TEL) de l'en-tête de données du télégramme, et dans lequel le nœud de distribution (CU1, CU2, CU3, CU4) est conçu pour insérer la partie de données (D-CU1, D-CU2, D-CU3) respectivement associée, au retour du télégramme de l'abonné esclave à l'abonné maître (M), lors du passage de télégramme, dans l'en-tête de données du télégramme, et ensuite, quand le télégramme ne présente aucune partie de commande (TEL), pour insérer de plus la partie de commande (TEL) dans l'en-tête de données du télégramme.

11. Réseau de communication selon l'une quelconque des revendications 7 à 10, dans lequel le réseau de communication d'automatisation est un système de bus de terrain basé sur Ethernet, en particulier un système de bus de terrain EtherCAT.
